# EUROPEAN PATENT SPECIFICATION

(11) **EP 3 961 440 B1**
(45) Date of publication and mention of the grant of the patent: **28.01.2026**
(21) Application number: 20812848.8
(22) Date of filing: 20.05.2020
(51) Int. Cl.: G06F 21/31, G06F 21/45, G06F 21/60

(54) **LOGIN METHOD FOR INTELLIGENT TERMINAL, AND ELECTRONIC DEVICE**
ANMELDEVERFAHREN FÜR EIN INTELLIGENTES ENDGERÄT UND ELEKTRONISCHE VORRICHTUNG
PROCÉDÉ D'OUVERTURE DE SESSION POUR TERMINAL INTELLIGENT, ET DISPOSITIF ÉLECTRONIQUE

(30) Priority: 24.05.2019 CN 201910437557
(43) Date of publication of application: 02.03.2022
(73) Proprietor: Huawei Technologies Co., Ltd., Shenzhen, Guangdong 518129 (CN)
(72) Inventor: WU, Wei, Shenzhen, Guangdong 518129 (CN); RUI, Jiang, Shenzhen, Guangdong 518129 (CN); LIU, Tao, Shenzhen, Guangdong 518129 (CN)
(74) Representative: Pfenning, Meinig & Partner mbB
(86) International application number: PCT/CN2020/091357
(87) International publication number: WO 2020/238728

(56) References cited:
- WO-A1-2015/188442
- WO-A1-2017/148341
- CN-A- 103 139 353
- CN-A- 105 025 165
- CN-A- 106 878 529
- CN-A- 106 953 975
- CN-A- 108 563 932
- CN-A- 108 563 933
- CN-A- 110 276 177
- US-A1- 2012 291 121
- US-A1- 2017 177 844

## Description

### TECHNICAL FIELD

This application relates to the field of electronic technologies, and in particular, to an intelligent terminal login method and an electronic device.

### BACKGROUND

Currently, intelligent terminals play an increasingly important role in people's lives, and a scenario of one device for a plurality of purposes is increasingly common. For example, for a tablet device, a parent and a child often share one tablet device in a home use scenario. However, the parent and the child have different requirements and use scenarios for the tablet device. Specifically, the parent may normally use an application on the tablet device without a limitation. When the child uses the tablet device, the parent prefers that the child may use the tablet device at a time specified by the parent or use an application type allowed by the parent.

In this scenario, parental management and control may be implemented through application setting. However, when the parent is not near the child and the child wants to use the tablet device, if the parent tells a management and control permission password to the child to unlock the tablet, management and control on use of the tablet by the child is lost. Alternatively, different system modes may be set on the tablet device to implement parental management and control, but switching between the different system modes consumes relatively much performance of the tablet device.

WO 2017/148341 discloses an authority management system, an authority management method and an electronic device.

### SUMMARY

In order to solve the above problems, this application provides an intelligent terminal login method according to claim 1, an intelligent terminal login method according to claim 2, an intelligent terminal login method according to claim 3, an electronic device according to claim 8 and a computer storage medium according to claim 9, so that a tablet device can be unlocked in a same user space by using two different user unlock passwords, and different system desktops can be entered for the different unlock passwords. This is simple and less time-consuming, and improves user experience.

According to a first aspect, a user login method is provided. The method is applied to an electronic device, and includes: displaying a first verification window in a screen-locked state; obtaining an unlock password entered in the first verification window; and displaying a first interface when the unlock password entered in the first verification window is a first password, where the first interface is a system desktop for a first user, and the first interface includes at least one first application; or displaying a second interface when the unlock password entered in the first verification window is a second password, where the second interface is a system desktop for a second user, and the second interface includes at least one second application. The first password is different from the second password, the at least one first application and the at least one second application are all stored in a user space having a first user identity ID, and the first user identity ID is used to identify the first user.

It should be understood that the first verification window may be an unlock password input window for unlocking the electronic device. After a user triggers a power button to turn on a screen display system, the unlock password input window may be displayed in the screen-locked mode of the electronic device, and the user may enter an unlock password.

For example, the first password may be an unlock password of a "parent" user. When the unlock password entered by the user in the first verification window is the unlock password 123456 of the "parent" user, the electronic device may display a system desktop used for the "parent" user after the unlocking. The first interface may include a plurality of applications used by the parent, for example, Contacts, Messages, Alipay, Task card store, Gallery, WeChat, Cards, Settings, Camera, Email, Videos, Stocks, Browser, and Kids Corner, which are referred to as first applications.

Alternatively, the second password may be an unlock password of a "child" user. When the unlock password entered by the user in the first verification window is the unlock password 654321 of the "child" user, the electronic device may display a secure child desktop used for the "child" user after the unlocking. The second interface may include a plurality of applications used by the child, for example, Fun V English, Arithmetic Online, Picture Learning Pinyin, and Peppa Pig, which are referred to as second applications.

According to the foregoing intelligent terminal login method, the electronic device may be unlocked in a same user space by using two different user passwords, and different user systems may be entered in the same user space. For example, the system desktop is entered by using the unlock password of the "parent" user, the secure child desktop is entered by using the unlock password of the "child" user, and a complete data record can be viewed without performing an Android multi-user switching operation. This simplifies operation steps, shortens an operation time, implements quick view of use data of another user, and improves user experience.

With reference to the first aspect, in some implementations of the first aspect, when the electronic device displays the second interface, the method further includes: receiving a first operation; displaying a second verification window in an unlocked state in response to the first operation; obtaining a switching password entered in the second verification window; and displaying the first interface when the switching password entered in the second verification window is a third password.

With reference to the first aspect and the foregoing implementations, in some implementations of the first aspect, the third password is the same as the first password.

For example, the first operation may be an operation of tapping to exit the secure child desktop. Specifically, when the electronic device displays the secure child desktop and the user taps an exit control or an exit login option, the electronic device displays the second verification window. It should be understood that the second verification window is used to enter a switching password, which is referred to as a "third password". The third password may verify whether the system desktop used for the "parent" user can be entered.

In a possible implementation, the third password is the same as the first password. Specifically, the switching password and the unlock password of the "parent" user may be same, for example, both are 123456. When switching password verification fails, the electronic device does not jump to the system desktop used for the "parent" user.

With reference to the first aspect and the foregoing implementations, in some implementations of the first aspect, when the electronic device displays the first interface, the method further includes: receiving a second operation, where the second operation is a tap operation performed on the first application on the first interface; and displaying the second interface in response to the second operation.

With reference to the first aspect and the foregoing implementations, in some implementations of the first aspect, the first application is Kids Corner.

For example, the second operation may be an operation of tapping Kids Corner. Specifically, the electronic device displays the system desktop used for the parent. The desktop includes Kids Corner. When the user taps Kids Corner, the electronic device directly enters the secure child desktop.

According to the foregoing intelligent terminal login method, in a same user space, the secure child desktop may be entered from the system desktop by tapping a child desktop application (for example, Kids Corner), or the system desktop may be entered from the secure child desktop of the "child" user after switching password verification, and a complete data record can be viewed without performing an Android multi-user switching operation. This simplifies operation steps, shortens an operation time, implements quick view of use data of another user, and improves user experience.

Specifically, in an actual use process, the parent may directly enter the secure child desktop from the system desktop to view device use details of the child or view complete use data of the child for the electronic device, user switching between a system mode of the parent and a secure desktop mode of the child is not performed, and the system mode of the parent and the secure desktop mode of the child correspond to a same user space. This is simple and less time-consuming, and consumes less performance of the electronic device.

With reference to the first aspect and the foregoing implementations, in some implementations of the first aspect, the method further includes: storing the first password and the first user identity ID in a first password storage area; storing the second password and a second user identity ID in a second password storage area, where the second user identity ID is used to identify the second user, and the first password storage area and the second password storage area are password storage areas in the user space having the first user identity ID; and when the unlock password entered in the first verification window is not the first password stored in the first password storage area, detecting whether the unlock password entered in the first verification window is the second password stored in the second password storage area.

In the foregoing secure verification process, in a user space corresponding to one user ID, secure verification is performed on unlock passwords stored in a plurality of partitions, and any verification result is obtained. It should be understood that, in this application, it is considered by default that a partition A is the "parent" user associated with Settings, and it may be understood that the partition A corresponds to a master user or an administrator user. Therefore, in a secure verification process, secure verification may be preferably performed on an unlock password stored in the partition A, and then verification is sequentially performed on a plurality of partitions such as a partition B and a partition C. Alternatively, a priority is set for each partition, and secure verification is performed on a plurality of partitions in a priority sequence. This is not limited in this application.

In the foregoing implementation process, in an unlock password storage process, by extending an original framework in which one user ID corresponds to only one unlock password storage area, a password storage area for one user ID is extended to a plurality of partitions, so that one user ID can support two or more unlock passwords. In a password verification process of an unlock service, a partition identifier and an entered password are sequentially sent to a TEE based on a current user ID, and a specific partition in which unlock password verification succeeds is determined based on different identifiers of partitions that succeed in the password verification, so as to determine different users to perform different processing and enter different system modes or invoke applications, for example, enter the system desktop used for the parent or the secure child desktop used for the child. According to the method, a password storage mechanism and an unlock mechanism of one user ID are extended in a user space corresponding to one user ID, so as to provide different unlock passwords for different users and distinguish between the different users in an unlocking process. Android multi-user switching is not performed in the entire process. This reduces performance consumption of the intelligent terminal, simplifies a user switching operation, shortens a user switching time, and improves user experience.

With reference to the first aspect and the foregoing implementations, in some implementations of the first aspect, the method further includes: storing the first password and the first user identity ID in a first password storage area; storing the second password and a second user identity ID in a second password storage area, where the second user identity ID is used to identify the second user, the second password storage area is a dedicated password storage area for the second user, and the second password storage area is associated with the first password storage area; and when the unlock password entered in the first verification window is not the first password stored in the first password storage area, detecting whether the unlock password entered in the first verification window is the second password stored in the second password storage area.

In the foregoing implementation process, in an unlock password storage process, a password storage area corresponding to a specific user ID (a child-specific ID) is created in the TEE to store a corresponding unlock password for the secure child desktop. In a password verification process of an unlock service, a secure verification process is added to a procedure of unlocking the ID of the first user (the master user or the "parent" user). Specifically, after the first user ID fails in normal unlocking, secure verification is invoked on the password of the child-specific ID. If the verification succeeds, the secure child desktop used for the child is directly entered. Implementation of the foregoing method does not affect normal password unlock performance of the master user, and can also implement a case in which the secure child desktop used for the child is directly entered by performing unlocking based on the child-specific ID. This meets a requirement of a plurality of users for one electronic device. In addition, for a user space created based on the child-specific ID, only a process of storing an unlock password in an Android multi-user solution is used, and the user space is not used by the user. In the entire process, Android multi-user switching is not performed, and the child-specific ID and password are delivered in the user space of the master user for verification and unlocking. This reduces performance consumption of the intelligent terminal, simplifies a user switching operation, shortens a user switching time, and improves user experience.

With reference to the first aspect and the foregoing implementations, in some implementations of the first aspect, the method further includes: storing the first password and the first user identity ID in a first password storage area; storing the second password in an application database of the first application, where the second password is associated with the first password; and when the unlock password entered in the first verification window is not the first password stored in the first password storage area, detecting whether the unlock password entered in the first verification window is the second password.

Optionally, the child unlock password may be encrypted and stored in an application database of Kids Corner; or the child unlock password may be encrypted and stored in an extensible markup language (extensible markup language, XML) of Kids Corner; or the child unlock password may be encrypted and stored in SharedPreferences, where SharedPreferences is defined in an Android system; or the child unlock password may be encrypted and stored in a system database, where the system database is a system shared database that is open to read by various applications; or the child unlock password may be encrypted and stored in the TEE, and the child unlock password encrypted and stored in the TEE is enabled to be associated with Kids Corner. In addition, Kids Corner internally provides an unlock interface. Therefore, when normal unlocking of the first user ID fails, the internal unlock interface of Kids Corner is directly invoked to perform password secure verification. This is not limited in this application.

In the foregoing implementation process, switching between different system modes of a same device for two users does not need to be implemented by setting a user ID or a user space, and an unlock service is internally implemented only by using a secure child desktop application (for example, Kids Corner) at an Android application layer. In a password verification process of the unlock service, after the ID of the master user fails in normal unlocking, an unlock interface provided by the secure child desktop application is directly invoked to perform child unlock password verification. If the password verification succeeds, unlocking is implemented and the secure child desktop used for the child is directly entered. In the entire process, Android multi-user switching is not performed, only an internal application unlock interface needs to be added to the Android application layer, and the child-specific ID and password are delivered in the user space of the master user for verification and unlocking, so that switching between different system modes of a same device for two users can be implemented. This reduces performance consumption of the intelligent terminal, simplifies a user switching operation, shortens a user switching time, and improves user experience.

According to a second aspect, an electronic device is provided, including one or more processors, a memory, a plurality of applications, and one or more programs. The one or more programs are stored in the memory, and when the one or more programs are executed by the processor, the electronic device is enabled to perform the following steps: displaying a first verification window in a screen-locked state; obtaining an unlock password entered in the first verification window; and displaying a first interface when the unlock password entered in the first verification window is a first password, where the first interface is a system desktop for a first user, and the first interface includes at least one first application; or displaying a second interface when the unlock password entered in the first verification window is a second password, where the second interface is a system desktop for a second user, and the second interface includes at least one second application. The first password is different from the second password, the at least one first application and the at least one second application are all stored in a user space having a first user identity ID, and the first user identity ID is used to identify the first user.

With reference to the second aspect, in some implementations of the second aspect, when the one or more programs are executed by the processor, the electronic device is enabled to perform the following steps: receiving a first operation; displaying a second verification window in an unlocked state in response to the first operation; obtaining a switching password entered in the second verification window; and displaying the first interface when the switching password entered in the second verification window is a third password.

With reference to the second aspect and the foregoing implementations, in some implementations of the second aspect, the third password is the same as the first password.

With reference to the second aspect and the foregoing implementations, in some implementations of the second aspect, when the one or more programs are executed by the processor, the electronic device is enabled to perform the following steps: receiving a second operation, where the second operation is a tap operation performed on the first application on the first interface; and displaying the second interface in response to the second operation.

With reference to the second aspect and the foregoing implementations, in some implementations of the second aspect, the first application is Kids Corner.

With reference to the second aspect and the foregoing implementations, in some implementations of the second aspect, when the one or more programs are executed by the processor, the electronic device is enabled to perform the following steps: storing the first password and the first user identity ID in a first password storage area; storing the second password and a second user identity ID in a second password storage area, where the second user identity ID is used to identify the second user, and the first password storage area and the second password storage area are password storage areas in the user space having the first user identity ID; and when the unlock password entered in the first verification window is not the first password stored in the first password storage area, detecting whether the unlock password entered in the first verification window is the second password stored in the second password storage area.

With reference to the second aspect and the foregoing implementations, in some implementations of the second aspect, when the one or more programs are executed by the processor, the electronic device is enabled to perform the following steps: storing the first password and the first user identity ID in a first password storage area; storing the second password and a second user identity ID in a second password storage area, where the second user identity ID is used to identify the second user, the second password storage area is a dedicated password storage area for the second user, and the second password storage area is associated with the first password storage area; and when the unlock password entered in the first verification window is not the first password stored in the first password storage area, detecting whether the unlock password entered in the first verification window is the second password stored in the second password storage area.

With reference to the second aspect and the foregoing implementations, in some implementations of the second aspect, when the one or more programs are executed by the processor, the electronic device is enabled to perform the following steps: storing the first password and the first user identity ID in a first password storage area; storing the second password in an application database of the first application, where the second password is associated with the first password; and when the unlock password entered in the first verification window is not the first password stored in the first password storage area, detecting whether the unlock password entered in the first verification window is the second password.

According to a third aspect, a user login method is provided. The method is applied to an electronic device, and includes: displaying a first verification window in a screen-locked state; obtaining an unlock password entered in the first verification window; displaying a first interface when the unlock password entered in the first verification window is a first password, where the first interface is a system desktop for a first user; or displaying a second interface when the unlock password entered in the first verification window is a second password, where the second interface is a system desktop for a second user; receiving a first operation when the second interface is displayed; displaying a second verification window in an unlocked state in response to the first operation; obtaining a switching password entered in the second verification window; and displaying the first interface when the switching password entered in the second verification window is a third password, where the first password is different from the second password.

According to a fourth aspect, a user login method is provided. The method is applied to an electronic device, and includes: displaying a first verification window in a screen-locked state; obtaining an unlock password entered in the first verification window; displaying a first interface when the unlock password entered in the first verification window is a first password, where the first interface is a system desktop for a first user; or displaying a second interface when the unlock password entered in the first verification window is a second password, where the second interface is a system desktop for a second user; receiving a second operation when the first interface is displayed, where the second operation is a tap operation performed on the first application on the first interface; and displaying the second interface in response to the second operation, where the first password is different from the second password.

According to a fifth aspect, this application provides an apparatus. The apparatus is included in an electronic device, and the apparatus has functions of implementing behavior of the electronic device in the foregoing aspects and the possible implementations of the foregoing aspects. The functions may be implemented by hardware, or may be implemented by hardware by executing corresponding software. The hardware or the software includes one or more modules or units corresponding to the foregoing functions, for example, a display module or unit, an obtaining module or unit, and a processing module or unit.

According to a sixth aspect, this application provides an electronic device, including a touchscreen. The touchscreen includes a touch-sensitive surface, a display, a camera, one or more processors, a memory, a plurality of applications, and one or more computer programs. The one or more computer programs are stored in the memory, and the one or more computer programs include instructions. When the instructions are executed by the electronic device, the electronic device is enabled to perform the intelligent terminal login method according to any possible implementation of any one of the foregoing aspects.

According to a seventh aspect, this application provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the intelligent terminal login method according to any possible implementation of any one of the foregoing aspects.

According to an eighth aspect, this application provides a computer storage medium, including computer instructions. When the computer instructions are run on an electronic device, the electronic device is enabled to perform the intelligent terminal login method according to any possible implementation of any one of the foregoing aspects.

According to a ninth aspect, this application provides a computer program product. When the computer program product is run on an electronic device, the electronic device is enabled to perform the intelligent terminal login method according to any possible implementation of any one of the foregoing aspects.

### BRIEF DESCRIPTION OF DRAWINGS

FIG. 1 is a schematic diagram of a hardware structure of an electronic device according to an embodiment of this application;
FIG. 2(a) and FIG. 2(b) are schematic diagrams of a system architecture of an electronic device according to an embodiment of this application;
FIG. 3(a) to FIG. 3(h) are schematic diagrams of a graphical user interface of an intelligent terminal login method.
FIG. 4(a) to FIG. 4(e) are schematic diagrams of an intelligent terminal login method according to an embodiment of this application;
FIG. 5(a) to FIG. 5(d) are schematic diagrams of another intelligent terminal login method according to an embodiment of this application;
FIG. 6(a) to FIG. 6(d) are schematic diagrams of a method for setting a secure child desktop according to an embodiment of this application;
FIG. 7 is a schematic diagram of an implementation process of an intelligent terminal login method according to an embodiment of this application;
FIG. 8(a) and FIG. 8(b) are a schematic diagram of an implementation process of another intelligent terminal login method according to an embodiment of this application;
FIG. 9 is a schematic diagram of an implementation process of another intelligent terminal login method according to an embodiment of this application;
FIG. 10 is a schematic flowchart of an intelligent terminal login method according to an embodiment of this application; and
FIG. 11 is a schematic diagram of composition of an electronic device according to an embodiment of this application.

### DESCRIPTION OF EMBODIMENTS

The following describes the technical solutions in the embodiments of this application with reference to the accompanying drawings in the embodiments of this application. In the descriptions of the embodiments of this application, unless otherwise specified, "/" means "or". For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions of the embodiments of this application, "a plurality of" means two or more than two.

The following terms "first" and "second" are merely intended for a purpose of descriptions, and shall not be understood as an indication or implication of relative importance or implicit indication of a quantity of indicated technical features. Therefore, a feature limited by "first" or "second" may explicitly or implicitly include one or more features. In the descriptions of the embodiments, unless otherwise specified, "a plurality of" means two or more.

The embodiments of this application provide an intelligent terminal login method. The method may be applied to an electronic device. Alternatively, the login method provided in this application may be implemented by using a separate application, and the application may meet use requirements of different users. Specifically, for a scenario in which different users use a same intelligent terminal, different unlock passwords are provided for the users, and different processing is performed for the different unlock passwords by using different implementations. This simplifies a cumbersome operation in a user switching process, and reduces performance consumption of the intelligent terminal.

The intelligent terminal login method provided in the embodiments of this application may be applied to the electronic device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in the embodiments of this application.

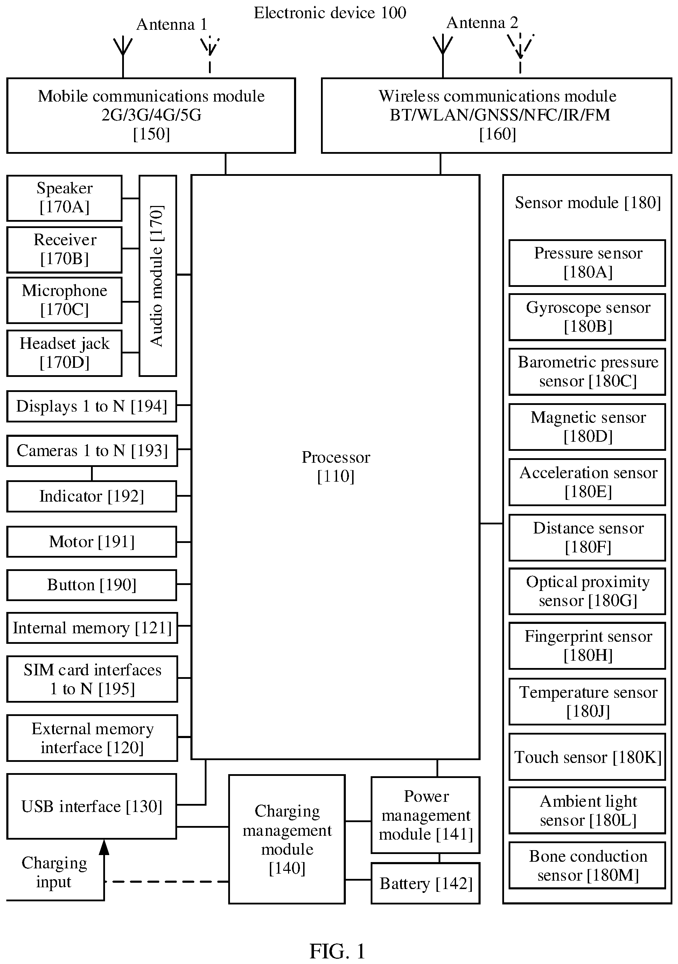

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processing unit (neural network processing unit, NPU). Different processing units may be independent components, or may be integrated into one or more processors.

For example, in this application, some processing units may implement a password storage service and a password secure verification and unlock service in this application. Optionally, the processing unit may control to store a password that is set by a user and a user identity (identity, ID) in different password storage areas, and perform secure verification based on an unlock password entered by the user. When the verification succeeds, the electronic device is controlled to perform unlocking; or when the verification fails, the electronic device remains in a locked state.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory, to avoid repeated access and reduce a waiting time of the processor 110, thereby improving system efficiency. In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDL) and one serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be configured to: perform audio communication, and sample, quantize, and code an analog signal. In some embodiments, the audio module 170 may be coupled to the wireless communications module 160 through a PCM bus interface. In some embodiments, the audio module 170 may alternatively transmit an audio signal to the wireless communications module 160 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communications bus, and converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music by using the Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communications module 160, the audio module 170, the sensor module 180, or the like. The GPIO interface may be further configured as the I2C interface, the I2S interface, the UART interface, the MIPI interface, or the like.

The USB interface 130 is an interface that conforms to a USB standard specification, and may be specifically a mini USB interface, a micro USB interface, a USB Type-C port, or the like. The USB interface 130 may be configured to connect to a charger for charging the electronic device 100, may be configured to transmit data between the electronic device 100 and a peripheral device, and may also be configured to connect to a headset to play audio by using the headset. Alternatively, the interface may be further configured to connect to another electronic device such as an AR device.

It can be understood that an interface connection relationship between the modules illustrated in this embodiment of this application is merely an example for description, and does not constitute a limitation on the structure of the electronic device 100. In some other embodiments of this application, the electronic device 100 may alternatively use an interface connection manner that is different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input by using a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input of the battery 142 and/or an input of the charging management module 140, and supplies power to the processor 110, the internal memory 121, an external memory, the display 194, the camera 193, the wireless communications module 160, and the like. The power management module 141 may be further configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communications module 150 can provide a solution, applied to the electronic device 100, to wireless communication including 2G, 3G, 4G, 5G, and the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transfer a processed electromagnetic wave to the modem processor for demodulation. The mobile communications module 150 may further amplify a signal modulated by the modem processor, and convert the signal into an electromagnetic wave for radiation through the antenna 1. In some embodiments, at least some function modules in the mobile communications module 150 may be disposed in the processor 110. In some embodiments, at least some function modules in the mobile communications module 150 and at least some modules in the processor 110 may be disposed in a same device.

The modem processor may include a modulator and a demodulator. The modulator is configured to modulate a to-be-sent low frequency baseband signal into a medium and high frequency signal. The demodulator is configured to demodulate a received electromagnetic wave signal into a low frequency baseband signal. Then, the demodulator transmits the low frequency baseband signal obtained through demodulation to the baseband processor for processing. The baseband processor processes the low-frequency baseband signal, and then transfers a processed signal to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in the same device as the mobile communications module 150 or another function module.

The wireless communications module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 160 may be one or more components that integrate at least one communications processing module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communications module 150, and the antenna 2 is coupled to the wireless communications module 160, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements the display function through the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diodes (quantum dot light emitting diode, QLED), or the like. In some embodiments, the electronic device 100 may include one or N displays 194, where N is a positive integer greater than 1.

In this application, the display 194 may be configured to display a first verification window in a screen-locked state, and display a second verification window in an unlocked state. The display 194 is further configured to display a system desktop used for a "parent" user, a secure child desktop used for a "child" user, and the like after the unlocking. The electronic device 100 may implement the photographing function through the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural network (neural network, NN) computing processor that rapidly processes input information by referring to a structure of a biological neural network, for example, by referring to a mode of transmission between human brain neurons, and can further perform self-learning continuously. The NPU can implement applications such as intelligent cognition of the electronic device 100, such as image recognition, facial recognition, speech recognition, and text understanding.

The external memory interface 120 may be configured to connect to an external memory card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (such as audio data and a phone book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement audio functions such as music playing and recording through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some function modules in the audio module 170 are disposed in the processor 110.

The speaker 170A, also referred to as a "horn", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mike" or a "microphone", is configured to convert a sound signal into an electrical signal. When making a call or sending a voice message, a user may make a sound near the microphone 170C through the mouth of the user, to input the sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, for example, a resistive pressure sensor, an inductive pressure sensor, a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change of the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an icon of Messages, an instruction for viewing an SMS message is executed. When a touch operation whose touch operation intensity is greater than or equal to the first pressure threshold is performed on an icon of Messages, an instruction for creating an SMS message is executed.

The gyroscope sensor 180B may be configured to determine a motion posture of the electronic device 100. In some embodiments, an angular velocity of the electronic device 100 around three axes (that is, axes x, y, and z) may be determined through the gyroscope sensor 180B. The gyroscope sensor 180B may be configured to perform image stabilization during photographing. For example, when a shutter is pressed, the gyroscope sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyroscope sensor 180B may be further used in a navigation scenario and a motion-sensing game scenario.

The barometric pressure sensor 180C is configured to measure barometric pressure. In some embodiments, the electronic device 100 calculates an altitude by using the barometric pressure measured by the barometric pressure sensor 180C, to assist in positioning and navigation.

The magnetic sensor 180D includes a Hall sensor. The electronic device 100 may detect opening and closing of a flip cover through the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect magnitudes of accelerations in various directions (usually on three axes) of the electronic device 100, and may detect a magnitude and a direction of gravity when the electronic device 100 is still. The acceleration sensor may be further configured to identify a posture of the electronic device, and is used in an application such as switching between a landscape mode and a portrait mode or a pedometer.

The distance sensor 180F is configured to measure a distance. The electronic device 100 may measure a distance in an infrared or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, through the optical proximity sensor 180G, that the user holds the electronic device 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. For example, in this application, when setting an unlock password for the electronic device, in addition to setting a digital password, the parent user may further enroll an unlock fingerprint or an application login fingerprint. When fingerprint verification succeeds, the parent user unlocks the electronic device or starts an application. This is not limited in this application.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally because of a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation on or near the touch sensor. The touch sensor may transfer the detected touch operation to the application processor, to determine a type of a touch event. The display 194 may provide a visual output related to the touch operation. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal. In some embodiments, the bone conduction sensor 180M may alternatively be disposed in a headset to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button (for example, a power button in this application), a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging status and a power change, and may also be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 may be compatible with different types of SIM cards. The SIM card interface 195 may also be compatible with the external storage card. The electronic device 100 interacts with a network by using the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In an embodiment of this application, an Android system with a layered architecture is used as an example to describe a software structure of the electronic device 100.

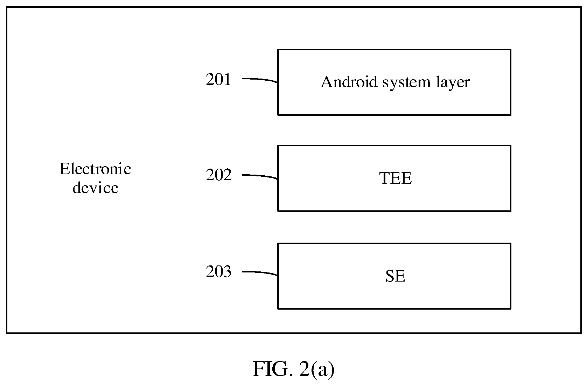

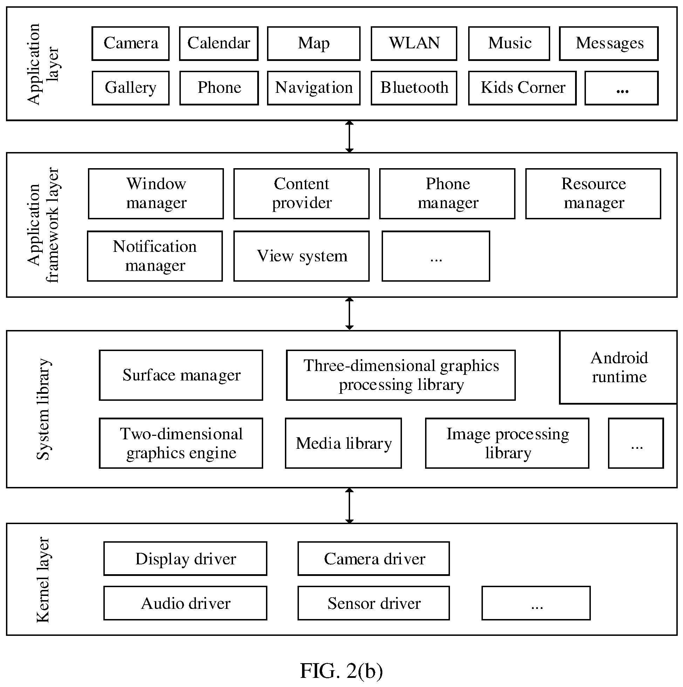

FIG. 2(a) and FIG. 2(b) are schematic diagrams of a system architecture of the electronic device 100 according to an embodiment of this application. In a layered architecture, software of the electronic device is divided into several layers, and each layer has a clear role and task. The layers communicate with each other through a software interface.

As shown in FIG. 2(a), in this application, the electronic device may include an Android system layer 201, a trusted execution environment (trusted execution environment, TEE) 202, and a secure element (secure element, SE) 203. The following briefly describes components, modules, and concepts related to the system architecture.

### 1. Android system layer 201

The Android system layer 10 provides a rich execution environment (rich execution environment, REE) for the electronic device, that is, a running environment provided for various applications of the electronic device such as Settings and Kids Corner enumerated in this application.

In some embodiments, as shown in FIG. 2(b), the Android system layer 201 may be divided into four layers: an application layer, an application framework (framework) layer, an Android runtime (Android runtime) and system library, and a kernel layer from top to bottom. The application layer may include a series of application packages.

As shown in FIG. 2(b), the application packages may include applications such as Camera, Gallery, Calendar, Phone, Map, Navigation, WLAN, Bluetooth, Music, Messages, and Kids Corner.

The application framework layer provides an application programming interface (application programming interface, API) and a programming framework for an application at the application layer. The application framework layer includes some predefined functions.

For example, in this application, the application framework (framework) layer may provide a secure password storage service, an unlock service, and the like for the electronic device. As shown in FIG. 2(b), the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and a bookmark, a phone book, and the like.

The view system includes visual controls, such as a control for displaying a text and a control for displaying an image. The view system may be configured to construct an application. A display interface may include one or more views. For example, a display interface including an SMS message notification icon may include a text display view and a picture display view.

The phone manager is configured to provide a communication function of the electronic device 100, for example, management of a call status (including answering or declining).

The resource manager provides various resources for an application, such as a localized character string, an icon, a picture, a layout file, and a video file.

The notification manager enables an application to display notification information in a status bar, and may be configured to convey a notification type message. The notification manager may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on the screen in a form of a dialog window. For example, text information is displayed in the status bar, an alert sound is played, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language, and a kernel library of Android.

The application layer and the application framework layer run on the virtual machine. The virtual machine executes Java files at the application layer and the application framework layer as binary files. The virtual machine is configured to perform functions such as object life cycle management, stack management, thread management, security and exception management, and garbage collection.

The system library may include a plurality of function modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

### 2. Trusted execution environment TEE 202

The TEE is a concept proposed by the global platform (global platform, GP). The TEE is a running environment that coexists with an Android system layer, a rich operating system (rich operating system, rich OS), or the like on a device, and provides a security service for the Android system layer or the rich OS. The TEE has a separate execution space and has a higher security level than the Android system layer or the rich OS. In this application, the Android system layer and the TEE are used as an example for description.

The TEE is a framework running on the electronic device, and provides security that is between security provided by the Android system layer and security provided by the SE. For example, for data such as some small payments or an enterprise virtual private network (virtual private network, VPN), strength of required security protection is not high, a separate SE is not required for protection, and the data cannot be directly placed at the Android system layer, to prevent an attack due to openness of the Android system layer. Therefore, the TEE may be used to provide security protection for such applications.

In addition, the TEE provides a secure execution environment for a trusted application (trusted application, TA), and also protects TA resource and data confidentiality, integrity, and access permission. In the TEE, all TAs are mutually independent and cannot access each other without authorization.

### 3. Secure element SE 203

The SE is a secure element built into the electronic device, and the secure element can enhance a security level of the electronic device.

For example, in a password storage process, the SE may manage or deliver a key factor to protect user private data or information. In a data backup process, the SE may create a security domain (security domain). Data in the security domain may be encrypted and then uploaded to an application layer for backup, to improve data security in the backup process. In a mobile payment process, the SE may rely on a trusted service manager (trusted service manager, TSM), is a platform applied to a mobile network operator or a financial institution, and may provide a user with a platform of remotely issuing various industry smart cards and managing cooperation relationships. Specifically, the SE may receive TSM management, and discover and download card applications such as bank cards, access cards, bus cards, membership cards, and coupons through the electronic device, so as to perform payment anytime and anywhere through the mobile phone to enjoy a secure and convenient mobile payment service.

The foregoing describes components or implementation environments related to the intelligent terminal login method provided in this application. It should be understood that an implementation process of the intelligent terminal login method provided in this application may include some or all of the foregoing components and modules. In descriptions of the following embodiments, the intelligent terminal login method provided in this application is described by using a tablet as an intelligent terminal. This is not limited in this application.

For ease of understanding, in the following embodiments of this application, an electronic device having the structures shown in FIG. 1 and FIG. 2(a) and FIG. 2(b) is used as an example to describe in detail the intelligent terminal login method provided in the embodiments of this application with reference to the accompanying drawings and application scenarios.

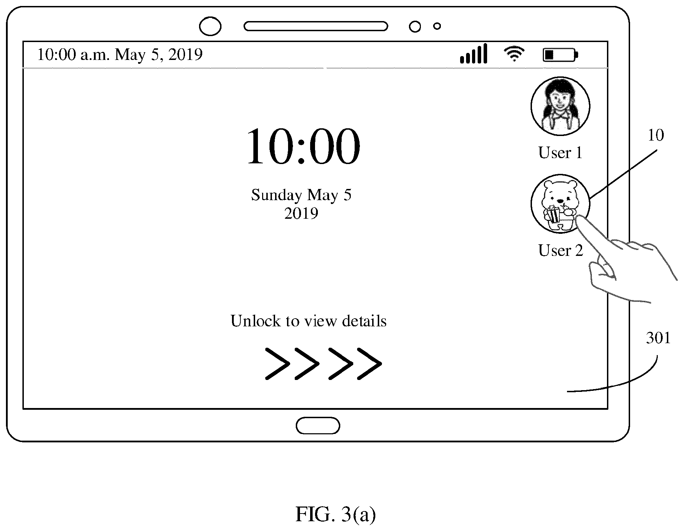

FIG. 3(a) to FIG. 3(h) are schematic diagrams of a graphical user interface (graphical user interface, GUI) of an intelligent terminal login method. In this application, the intelligent terminal login method provided in this application is described in detail by using a tablet device as an intelligent terminal.

To meet use requirements of different users for a same intelligent terminal, an Android multi-user solution is currently provided. For example, different user spaces may be set on the tablet device, and respectively correspond to different system modes. In other words, different user identities (identity, ID) may be allocated to different users, the user IDs respectively correspond to separated user spaces, all pieces of user data corresponding to the user IDs are stored in the respective user spaces and are separated from each other, and only one unlock password can be set for each user ID. During device unlocking, different unlock passwords and user IDs are used to distinguish between different users, so as to meet a multi-user use scenario.

It should be understood that a user space may be understood as a system mode corresponding to one user, and different user spaces may be understood as different system modes used by different users. For example, different user spaces are set for a parent and a child on the tablet device, and the two different user spaces respectively include a system desktop used for the parent and a secure child desktop used for the child.

For example, as shown in Table 1, a user 1 has a unique user identity user ID 1 and a first user space. In other words, the first user, the user ID 1, and the first user space are in a one-to-one correspondence. Each user space includes a plurality of applications. For example, a system in the first user space may include applications such as Camera, Phone, Map, WLAN, and Kids Corner, and a data packet or an instruction of each application has a fixed storage path and is stored in the first user space. It should be understood that the data packet or the instruction of each application stored in the first user space is separated from a data packet or an instruction of each application stored in a second user space.

**Table 1**

| User | User identity | User space | Application type | Storage directory |
|---|---|---|---|---|
| User 1 | User ID 1 (00) | First user space | Camera | 00-001 |
| | | | Phone | 00-002 |
| | | | Map | 00-003 |
| | | | WLAN | 00-004 |
| | | | Kids Corner | 00-005 |
| | | | ... | ... |
| User 2 | User ID 2 (10) | Second user space | Fun V English | 10-001 |
| | | | Arithmetic Online | 10-002 |
| | | | Picture Learning Pinyin | 10-003 |
| | | | Peppa Pig | 10-004 |
| | | | ... | ... |
| ... | ... | ... | ... | ... |

As shown in FIG. 3(a), after a user triggers a power button to turn on a screen display system, currently output interface content 301 is displayed in a screen-locked mode of the tablet device. In addition to interface elements such as a time and a date on the tablet device, the interface content 301 may include two user names in the upper right corner. The two user names "User 1" and "User 2" respectively correspond to two different user IDs and user spaces. "User 1" corresponds to a system desktop used for the user 1, and "User 2" corresponds to a system desktop used for the user 2.

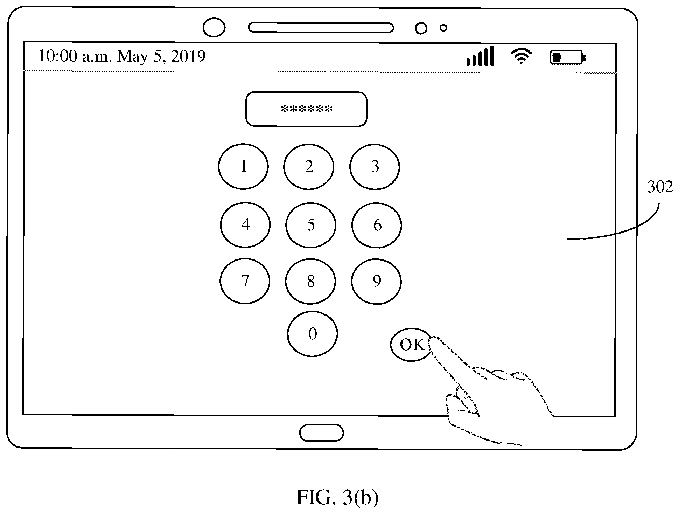

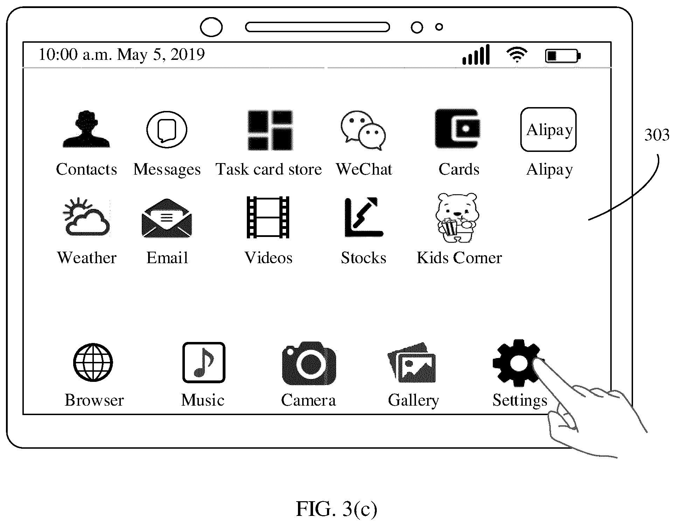

As shown in FIG. 3(a), the user may perform a tap operation on a user name icon 10 of "User 2". In response to the tap operation, the electronic device starts one system desktop used for the user 2 corresponding to "User 2". The tablet device may display a password verification interface 302 shown in FIG. 3(b). The password verification interface 302 is used to enter the system desktop corresponding to "User 2", and may include a password input window. When the user enters an unlock password corresponding to the user ID of "User 2", the tablet device may jump to a system desktop 303 that corresponds to "User 2" and that is shown in FIG. 3(c) after the unlocking. The system desktop 303 corresponding to "User 2" may display a preset application Kids Corner provided in this embodiment of this application, and a plurality of third-party applications (application, App) such as Contacts, Messages, Task card store, WeChat, Cards, Alipay, Weather, Email, Videos, Stocks, Browser, Music, Gallery, Settings, Camera, and Settings. It should be understood that the system desktop 303 may further include more other applications. This is not limited in this application.

It should be understood that, in an existing technical solution, there are two possible implementations in which the user switches from the system desktop used for "User 2" to the system desktop used for "User 1".

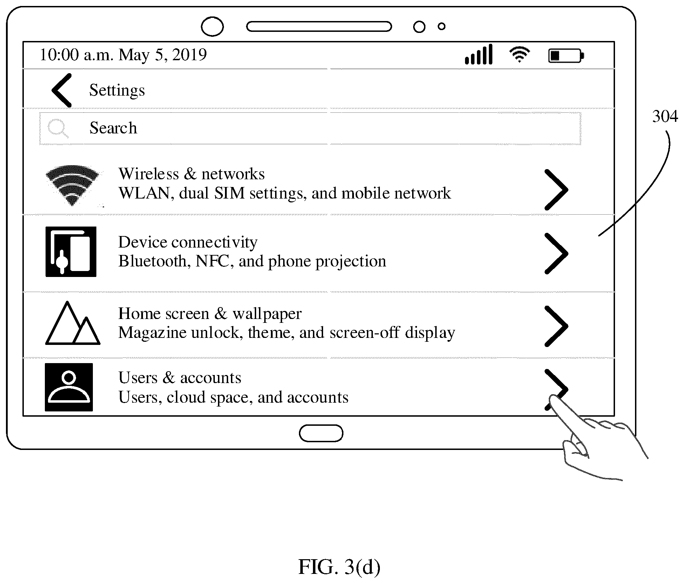

In a possible implementation, the user may manually switch from Settings by invoking Settings on the tablet device. For example, as shown in FIG. 3(c), the user may tap Settings on the tablet device, and the tablet device may display a main interface 304 of Settings shown in FIG. 3(d) to enter a setting interface. The main interface 304 of Settings includes a plurality of menu options, for example, Wireless & networks, Device connectivity, Home screen & wallpaper, and Users & accounts. The user may obtain more menu options by performing an upward slide operation on a screen. Details are not described herein again.

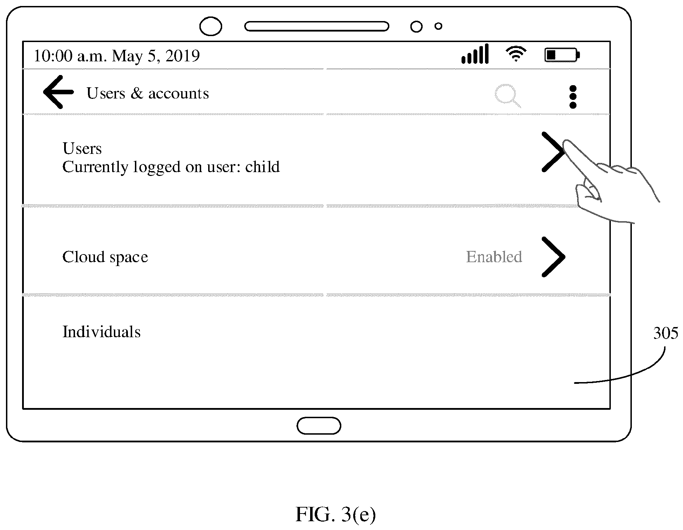

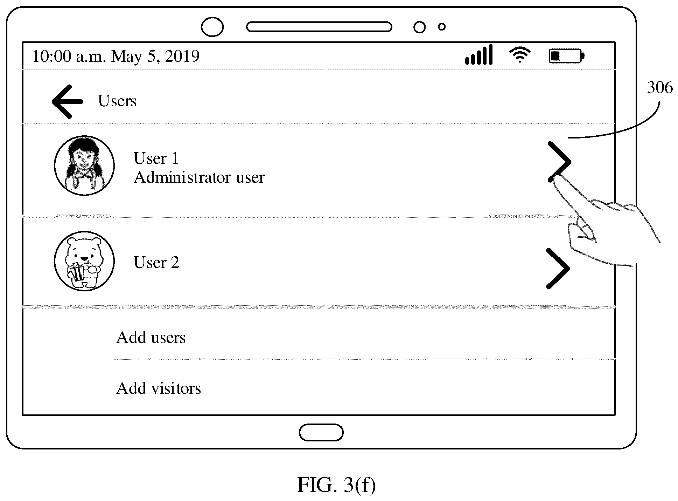

The user taps the menu option "Users & accounts" shown in FIG. 3(d), so that the tablet device can jump to a user and account interface 305 shown in FIG. 3(e). The interface 305 includes a multi-user option, a cloud space option, a personal option, and the like. The user may tap the option "Multi-user", and further display a multi-user list interface 306 shown in FIG. 3(f). The interface may include a list of a plurality of user IDs that are set by the user for the tablet device. The user may tap any user to perform user switching.

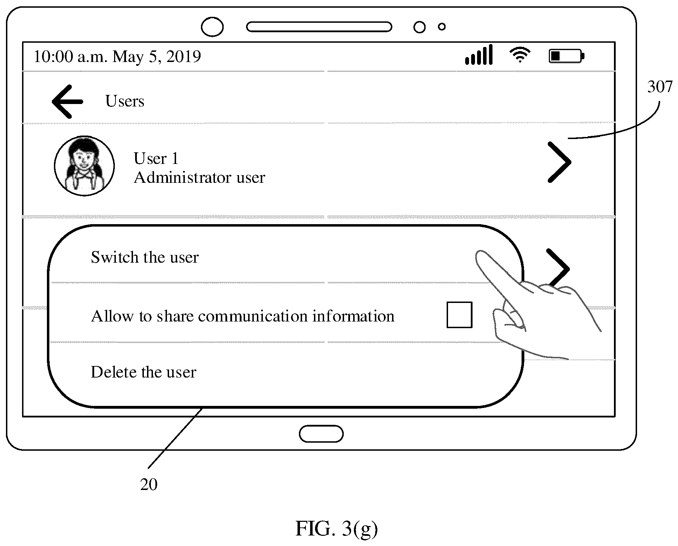

For example, as shown in FIG. 3(f), the user taps "User 1", and the tablet device displays an interface 307 shown in FIG. 3(g) in response to the tap operation of the user. The interface 307 includes a selection window 20. The selection window 20 includes a user switching option, a communication sharing allowed option, and a deletion option. The user switching option is used to start a user switching operation. The communication information sharing allowed option is used to set related content of a communication record such as a phone book, a call record, or a short message shared between a current user and another user. "Delete the user" is used to delete a selected user.

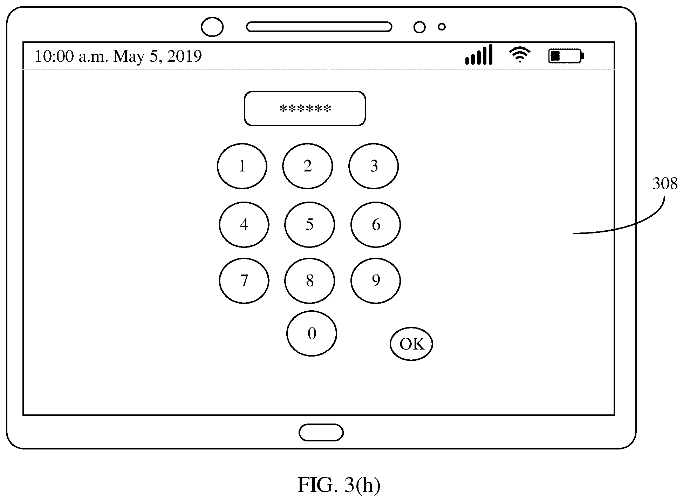

When the user switching option in the selection window 20 is tapped, the tablet device may switch to the system desktop corresponding to "User 1", for example, jump to a password verification interface 308 shown in FIG. 3(h) for the system desktop used for "User 1". The user may enter an unlock password corresponding to "User 1"on the password verification interface 308 to perform password verification, and after the password verification succeeds, access the system desktop used for "User 1". Details are not described herein again.

Alternatively, in the other possible implementation, first, the user may directly press the power button or tap a screen lock control (button) to lock a screen of the tablet device, then press the power button to turn on the screen of the tablet device, and display the interface 301 shown in FIG. 3(a). The user may select to tap "User 1" in the upper right corner to restart "User 1", then enter an unlock password corresponding to "User 1" for password verification, and after the password verification succeeds, enter the system desktop used for "User 1".

The tablet device is used as an example in FIG. 3(a) to FIG. 3(h) to describe an existing Android multi-user solution of the intelligent terminal. Different user spaces and system modes are set for different users, so as to switch between the system modes to meet user requirements of a plurality of users for a same intelligent terminal. However, in a user switching process, performance consumption of the intelligent terminal is relatively large, the switching is time-consuming, and user experience is poor. In addition, in the Android multi-user solution, all pieces of data of the users are separated. Consequently, the solution cannot be applied to a scenario in which different pieces of user data are required for interaction. For example, in a process of using a family tablet device, a system desktop used for a parent and a secure child desktop used for a child user are set for the tablet device. When the parent wants to view details about child's use of the tablet device, the parent can only perform user switching to view the details about the child's use of the tablet device after switching to the secure child desktop used for the child, and cannot view the details on the system desktop used for the parent. Consequently, user experience is poor. In addition, for many entry-level terminal devices, a multi-user function may be shielded in consideration of performance, and consequently a use requirement of a user cannot be met.

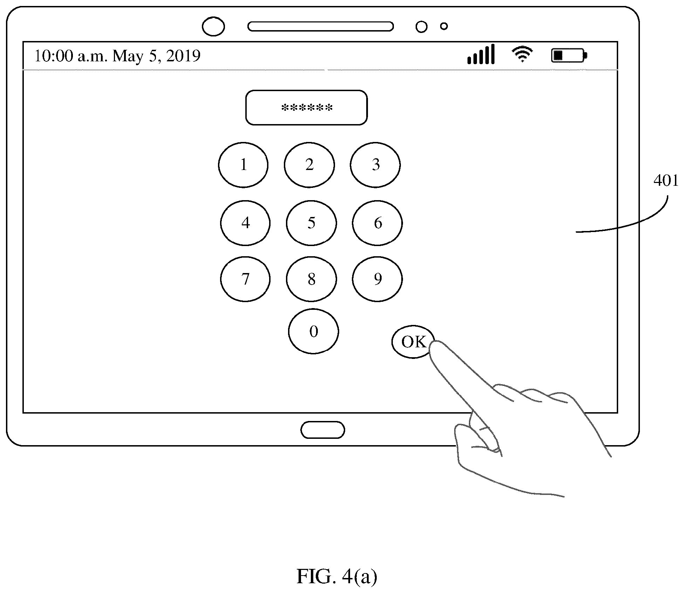

FIG. 4(a) to FIG. 4(e) are schematic diagrams of an intelligent terminal login method according to an embodiment of this application. In descriptions of this embodiment of this application, a "parent" user and a "child" user are used as an example. The "parent" user corresponds to a parent user ID, and a desktop used for the "parent" user is referred to as a system desktop. The "child" user corresponds to a child user ID, and a desktop used for the "child" user is referred to as a secure child desktop. In addition, the "parent" user and the "child" user each correspond to one unlock password.

As shown in FIG. 4(a), after a user triggers a power button to turn on a screen display system, a currently output password verification interface 401 is displayed in a screen-locked mode of a tablet device. The password verification interface 401 includes a password input window. When the user enters the unlock password corresponding to the "parent" user ID, the tablet device may be unlocked.

It should be understood that, after the user enters the unlock password in FIG. 4(a), unlocking may be performed directly, or may be performed by tapping a control "OK". This is not limited in this application.

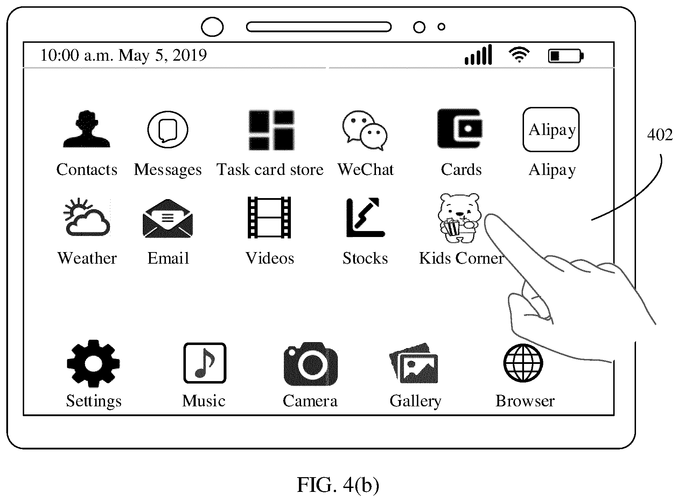

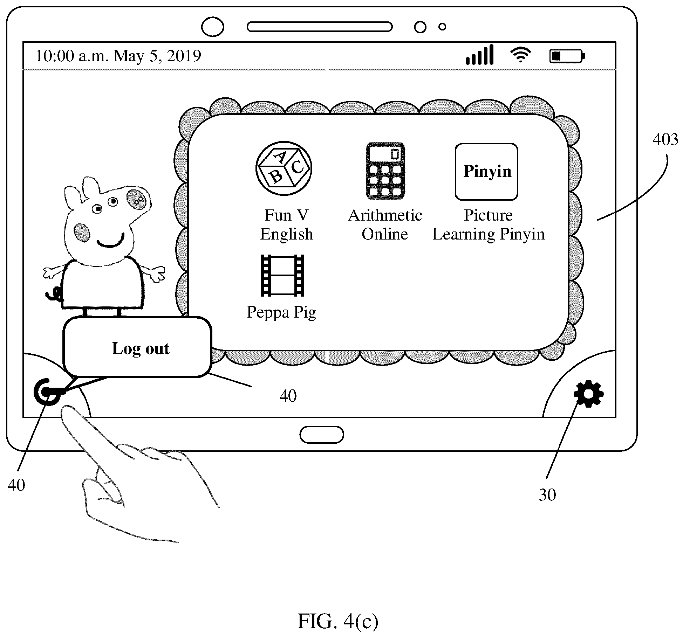

The unlocked tablet device displays a system desktop 402 shown in FIG. 4(b) after the unlocking. The system desktop 402 displays an application Kids Corner provided in this embodiment of this application to enter the secure child desktop, and a plurality of third-party applications (application, App) such as Contacts, Messages, Alipay, Task card store, Gallery, WeChat, Cards, Settings, Camera, Email, Videos, Stocks, and Browser. It should be understood that the system desktop 402 may further include more other applications. This is not limited in this application. The system desktop 402 is a system that is set for the parent. On the system desktop 402, when entering the secure child desktop, the user may perform a tap operation on "Kids Corner" shown in FIG. 4(b). In response to the tap operation, the tablet device displays a secure child desktop 403 shown in FIG. 4(c).

It should be understood that, in this application, the preset application Kids Corner is used as an entrance for entering from the system desktop 402 of the "parent" user to the secure child desktop 403 used for the "child" user. The parent may control Kids Corner to provide the child with a plurality of secure application, for example, Fun V English, Arithmetic Online, Picture Learning Pinyin, and Peppa Pig. It should be understood that the secure child desktop 403 may include more other applications. This is not limited in this application.

The secure child desktop 303 includes an exit control 40. The exit control 40 may be configured to exit a current logged-in system mode. In addition, the secure child desktop 403 may further include controls with different functions, for example, a control 30. The control 30 may be used by the parent to perform setting and parameter control on the secure child desktop. This is not limited in this application. It should be understood that, when the user enters the secure child desktop 403 shown in FIG. 4(c) from the system desktop 402 shown in FIG. 4(b), the user does not need to enter a password to perform user identity verification. This operation is similar to an operation that the user taps to start an app and is simple. The tablet device may directly enter the secure child desktop. To be specific, the tablet device directly starts the secure child desktop in a system mode used for the parent, without a need of performing user switching. This shortens an operation time, reduces performance consumption of the tablet device, and improves user experience.

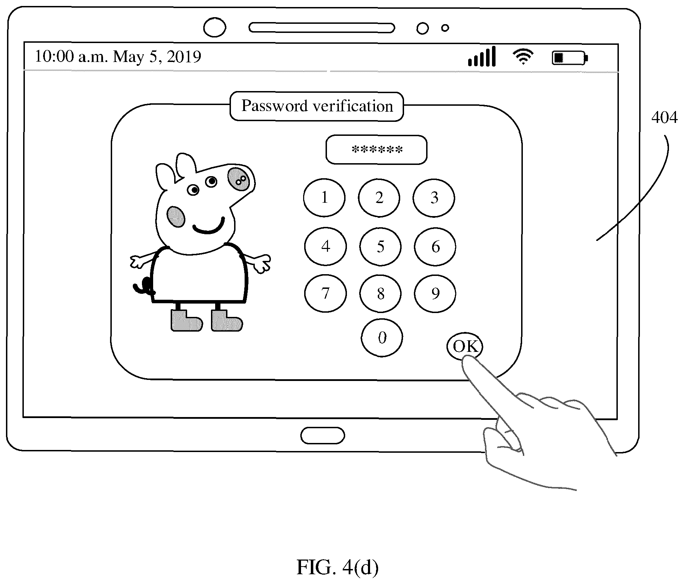

When the user switches from the secure child desktop 403 to the system desktop 402, the user may perform a tap operation on the exit control 40 shown in FIG. 4(c), and the tablet device may directly jump to a password verification interface 404 shown in FIG. 4(d) in response to the tap operation. Alternatively, after the user taps the exit control 40, an option "Log out" is popped up, and the user taps the option "Log out" to jump to the password verification interface 404 shown in FIG. 4(d). This is not limited in this application.

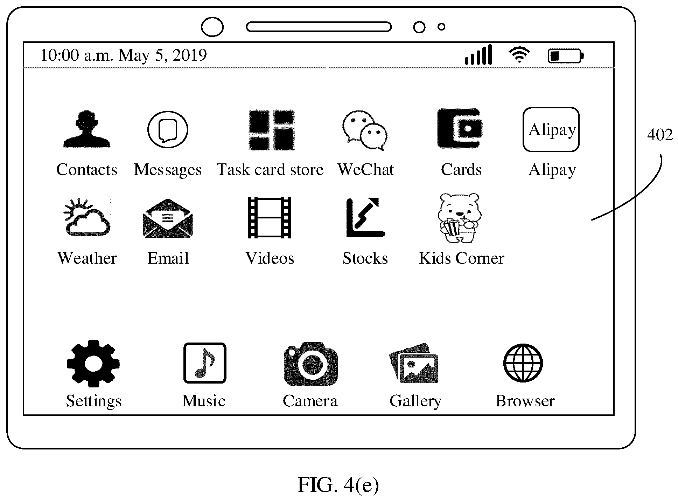

On the password verification interface 404 shown in FIG. 4(d), the user may enter a password for verification. When the password verification succeeds, the tablet device switches to the system desktop 402 shown in FIG. 4(e). When the password verification fails, the tablet device does not jump to the system desktop 402 shown in FIG. 4(e).

For example, the tablet device may continue to display the password verification interface 404. Alternatively, the tablet device pops up a prompt window "Wrong password" to prompt the user that the password verification fails; and after the prompt window is displayed for a specific period of time, the password verification interface 404 continues to be displayed and the user may enter a new password for verification again. Alternatively, the tablet device prompts, through vibration, the user that the entered password is wrong. This is not limited in this application.

When a quantity of user password verification failures reaches a preset quantity (for example, four), the electronic device may return to the secure child desktop, or the user may tap a control "Back" to return to the secure child desktop. This is not limited in this application.

It should be understood that, in this application, the password corresponding to the "parent" user is different from the password corresponding to the "child" user. For example, the password corresponding to the "parent" user and the password corresponding to the "child" user may be different passwords that are set by the parent. In the descriptions of this embodiment of this application, 123456 is used as the password corresponding to the "parent" user, and 654321 is used as the password corresponding to the "child" user. In this case, the parent may notify the child of the unlock password 654321 of the "child" user.

It should be further understood that the password verification interface 404 shown in FIG. 4(d) may be understood as a password verification window for exiting the secure child desktop and entering the system desktop used for the parent. Optionally, a password for exiting the secure child desktop and entering the system desktop used for the parent may be the same as the unlock password of the "parent" user, for example, may be set to 123456; or may be another password that is different from the unlock password 123456 of the "parent" user and the unlock password 654321 corresponding to the "child" user. This is not limited in this application.

It should be further understood that, in this application, a form of the unlock password is not limited to a digital password, a fingerprint, facial information verification, and the like. In the descriptions of this embodiment of this application, the digital password is used as an example. This is not limited in this application.

According to the foregoing intelligent terminal login method, in a same user space, the secure child desktop may be entered from the system desktop by tapping a child desktop application (for example, Kids Corner), and a complete data record can be viewed without performing an Android multi-user switching operation. This simplifies operation steps, shortens an operation time, implements quick view of use data of another user, and improves user experience. Specifically, in an actual use process, the parent may directly enter the secure child desktop from the system desktop to view device use details of the child or view complete use data of the child for the tablet device, user switching between a system mode of the parent and a secure desktop mode of the child is not performed, and the system mode of the parent and the secure desktop mode of the child correspond to a same user space. This is simple and less time-consuming, and consumes less performance of the tablet device.

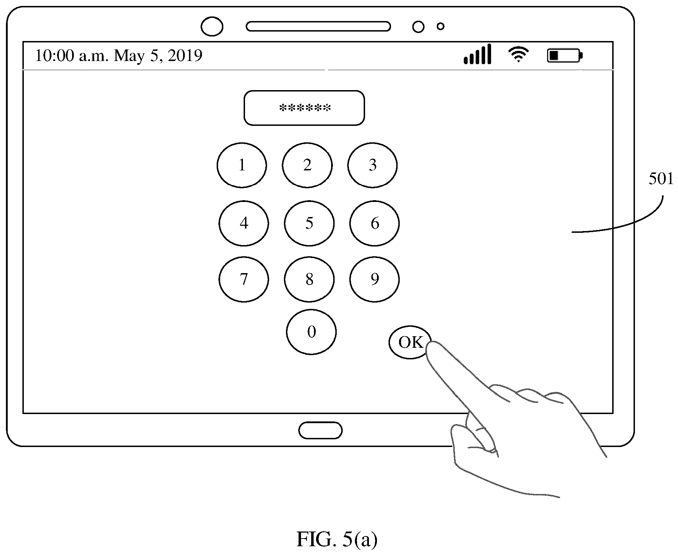

FIG. 5(a) to FIG. 5(d) are schematic diagrams of another intelligent terminal login method according to an embodiment of this application.

As shown in FIG. 4(a), when the user enters the unlock password 123456 corresponding to the "parent" user on the password verification interface, the tablet device may be unlocked. Likewise, as shown in FIG. 5(a), after the user triggers the power button to turn on the screen display system, a currently output password verification interface 501 is displayed in the screen-locked mode of the tablet device. When the user enters the unlock password 654321 corresponding to the "child" user on the password verification interface 501, the tablet device may also be unlocked.

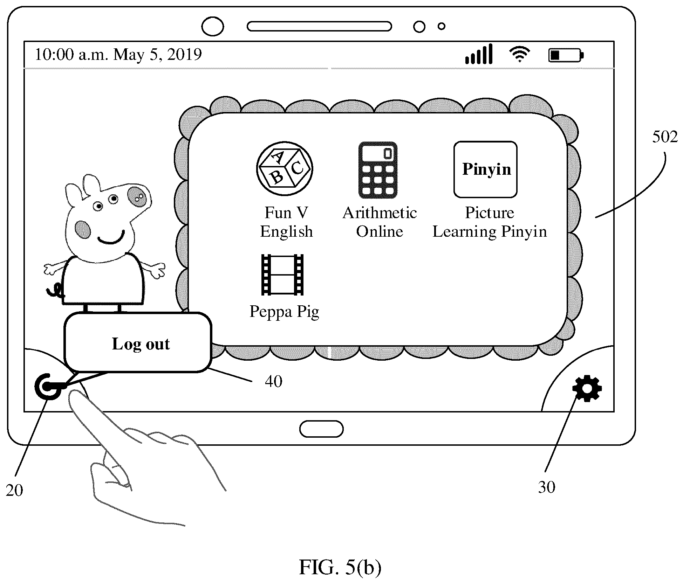

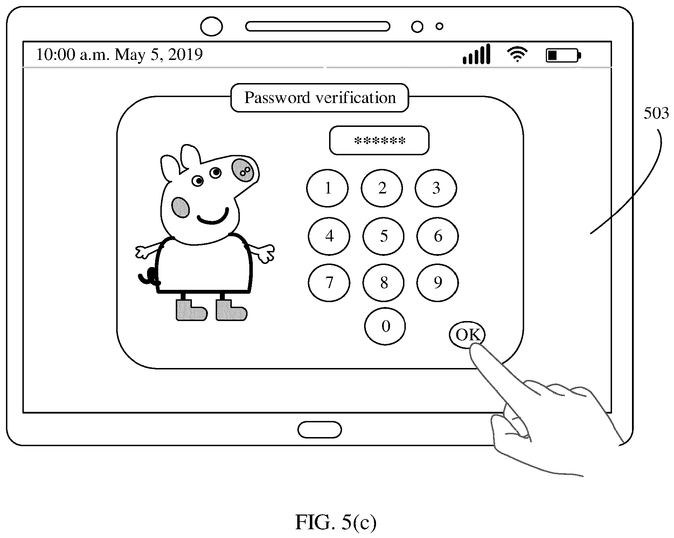

When the user enters the unlock password 654321 corresponding to the "child" user, the tablet device may jump to an unlocked secure child desktop 502 shown in FIG. 5(b). The secure child desktop 502 displays a plurality of third-party applications. When the user switches from the secure child desktop 502 to a system desktop 503, the user may perform a tap operation on an exit control 40 shown in FIG. 5(b), and the tablet device may directly jump to the password verification interface 503 shown in FIG. 5(c) in response to the tap operation. Alternatively, after the user taps the exit control 40, an option "Log out" may be popped up, and the user taps the option "Log out" to jump to the password verification interface 503 shown in FIG. 5(c). This is not limited in this application.

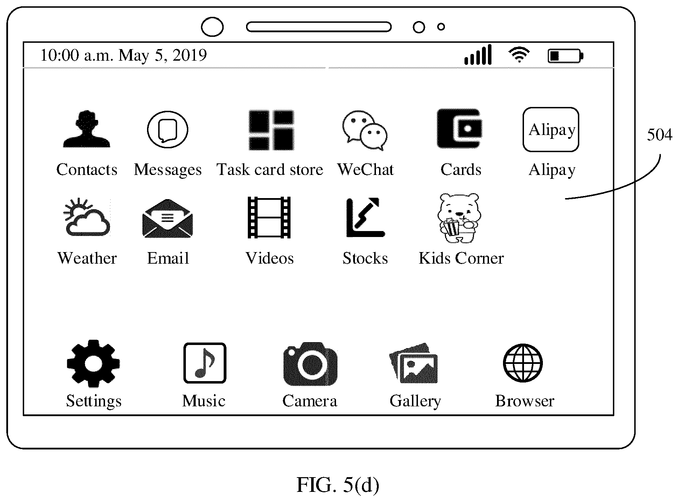

On the password verification interface 503 shown in FIG. 5(c), the user may enter a switching password for verification. When the switching password verification succeeds, the tablet device switches to a system desktop 504 shown in FIG. 5(d). It can be understood that the password entered by the user herein may be the unlock password 123456 of the "parent" user, or may be another password that is different from the unlock password 123456 of the "parent" user and the unlock password 654321 of the "child" user. This is not limited in this application.

When the password verification fails, the tablet device does not jump to the system desktop 504 shown in FIG. 5(d). For example, the tablet device may continue to display the password verification interface 503. Alternatively, the tablet device pops up a prompt window "Wrong password" to prompt the user that the password verification fails; and after the prompt window is displayed for a specific period of time, the password verification interface 503 continues to be displayed and the user may enter a new password for verification again. Alternatively, the tablet device prompts, through vibration, the user that the entered password is wrong. This is not limited in this application.

When a quantity of user password verification failures reaches a preset quantity (for example, four), the electronic device may return to the secure child desktop, or the user may tap a control "Back" to return to the secure child desktop. This is not limited in this application.

According to the foregoing intelligent terminal login methods described in FIG. 4(a) to FIG. 4(e) and FIG. 5(a) to FIG. 5(d), the tablet device may be unlocked in a same user space by using two different user passwords, and different user systems may be entered in the same user space. For example, the system desktop is entered by using the unlock password of the "parent" user, and the secure child desktop is entered by using the unlock password of the "child" user. In addition, the secure child desktop may be directly entered from the system desktop of the "parent" user by tapping a child desktop application icon (for example, Kids Corner), or the system desktop may be entered from the secure child desktop of the "child" user after switching password verification, and a complete data record can be viewed without performing an Android multi-user switching operation in the entire process. This simplifies operation steps, shortens an operation time, implements quick view of use data of another user, and improves user experience. Specifically, in an actual use process, the parent may directly enter the secure child desktop from the system desktop to view device use details of the child or view complete use data of the child for the tablet device, user switching between a system mode of the parent and a secure desktop mode of the child is not performed, and the system mode of the parent and the secure desktop mode of the child correspond to a same user space. This is simple and less time-consuming, and consumes less performance of the tablet device.

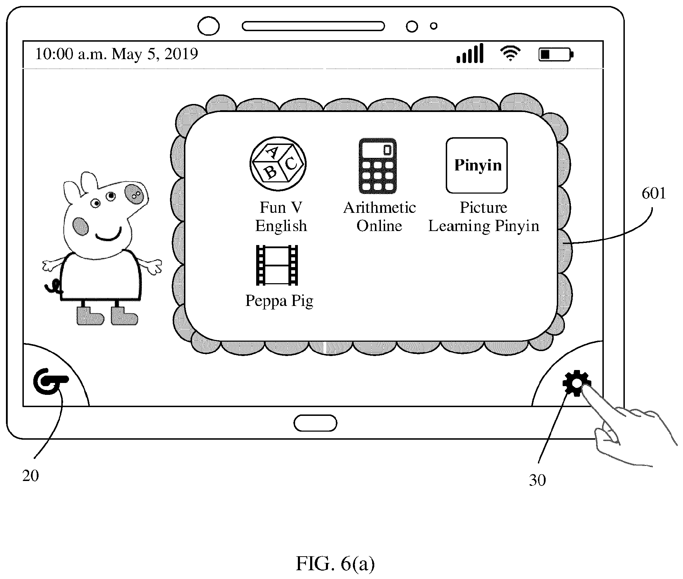

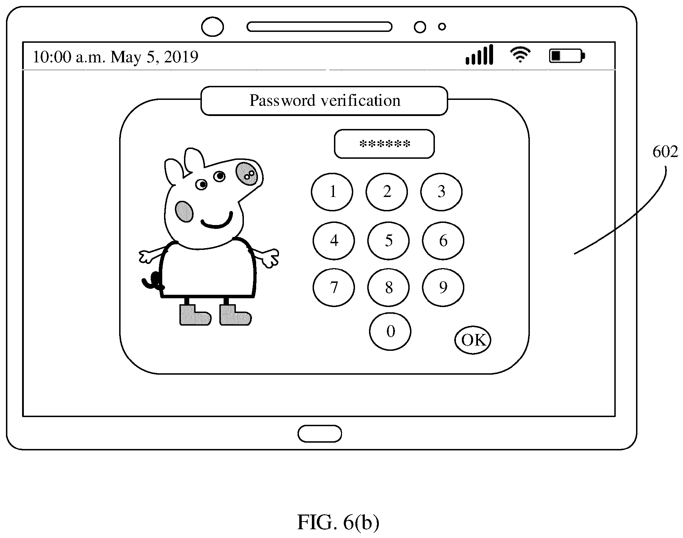

According to the foregoing intelligent terminal login methods, the "parent" user may view complete use data of the child for the tablet device, and monitor child's use of the tablet device. FIG. 6(a) to FIG. 6(d) are schematic diagrams of an intelligent terminal setting method according to an embodiment of this application.

As shown in FIG. 6(a), a secure child desktop 601 may include a control 30. The user may set the secure child desktop and monitor child's use of the tablet device by using the control 30.

For example, the user may perform a tap operation on the control 30 shown in FIG. 6(a), and the tablet device may jump to a password verification interface 602. The user needs to enter a password on the password verification interface 602 to set the secure child desktop and monitor the child's use of the tablet device.

Optionally, an unlock password corresponding to the password verification interface 602 may be the unlock password 123456 of the "parent" user, in other words, is the same as the password used by the "parent" user to unlock the system desktop of the tablet device; or an unlock password corresponding to the password verification interface 602 may be a password 000000 that is reset by the user. This is not limited in this application. It should be understood that a form of the unlock password of the control 30 is not limited to a digital password, a fingerprint, facial information verification, or the like. This is not limited in this application.

Setting a verification password for the control 30 prevents the child from changing a secure child desktop setting, changing a child's historical use record of the tablet device, or the like in a process of using the tablet device, ensures that the parent monitors the child's use of the tablet device, and improves user experience.

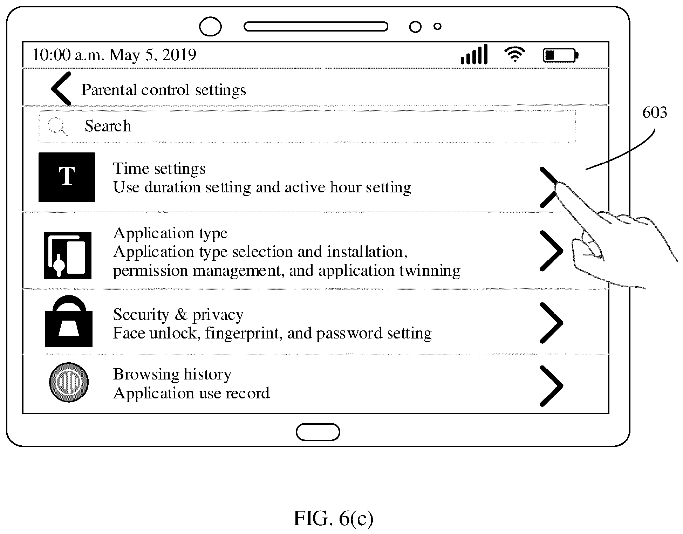

When verification on the password entered by the user on the password verification interface 602 succeeds, the tablet device may enter a setting interface 603 of the secure child desktop shown in FIG. 6(c). For example, the setting interface 603 of the secure child desktop may include a time setting menu, an application type menu, a security and privacy menu, and a browsing history menu. The user may obtain more setting menus by performing a pull-down operation or the like. This is not limited in this application.

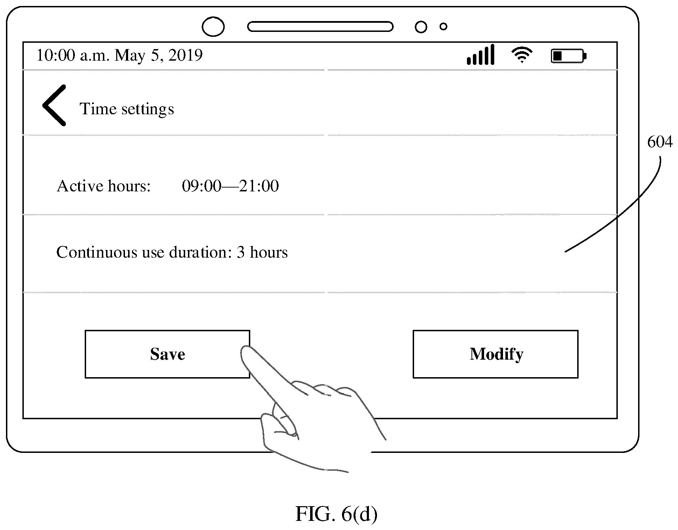

The time setting menu may be used to set active hours, duration, and the like of using the secure child desktop. For example, the user taps the menu "Time setting" shown in FIG. 6(c), the tablet device may enter an interface 604 shown in FIG. 6(d), the user may tap a control "Modify" on the interface 604 to modify data such as active hours and duration of using the secure child desktop by the child, and the user may tap a control "Save" to save modified data such as modified active hours and duration.

The application type menu may be used to manage an application type of the secure child desktop, for example, install different applications for the secure child desktop and set different application use permissions. For example, the secure child desktop may be used for a plurality of children. For example, if an application A and an application B are used for children in a junior high school stage, and the application B, an application C, and an application D are used for children in a preschool education stage, permissions may be set for the application A, the application C, and the application D in the application type menu, to set different permissions for different children. This is not limited in this application.

The security and privacy menu may be used to manage an unlock password for the secure child desktop, for example, set a digital password, a fingerprint password, and a facial information password for the secure child desktop. Optionally, the security and privacy menu may alternatively be set in Settings on the system desktop used for the "parent" user. This is not limited in this application.

The browsing history menu may be used to view child's use details of the secure child desktop, such as duration in which the child uses Fun V English and duration in which the child uses Arithmetic Online, so that the parent can more accurately monitor the child's use of the tablet device and guide child's learning based on the child's use. This improves user experience.

In conclusion, according to the intelligent terminal login method provided in this embodiment of this application, a procedure of unlocking a locked screen is modified, and different unlock passwords are provided for different users, to distinguish between the different users in the unlocking process and enter systems for the different users. In addition, a complete data record can be viewed without performing an Android multi-user switching operation in the entire process. This simplifies operation steps, shortens an operation time, implements quick view of use data of another user, and improves user experience. Specifically, in an actual use process, the parent may directly enter the secure child desktop from the system desktop to view device use details of the child or view complete use data of the child for the tablet device, user switching between a system mode of the parent and a secure desktop mode of the child is not performed, and the system mode of the parent and the secure desktop mode of the child correspond to a same user space. This is simple and less time-consuming, and consumes less performance of the tablet device.

In a possible implementation, different system modes may be set for a plurality of users in this application in addition to two different system modes that are set for the "parent" user and the "child" user.

For example, one parent sets three different secure child desktops for three children, installs different application types on the secure child desktops, and monitors use of a secure child desktop corresponding to each child. Specifically, secure child desktops are respectively set for three children in one application "Kids Corner", or three "Kids Corner" application icons may be obtained through App Twin and respectively correspond to three different children, and the children may access different secure child desktops by using respective unlock passwords. This is not limited in this application.

With reference to the foregoing embodiments and related accompanying drawings, an embodiment of this application provides a solution of implementing an intelligent terminal login method. The method may be implemented by the electronic device (for example, a mobile phone or a tablet computer) having the touchscreen and the camera in FIG. 1 and FIG. 2(a) and FIG. 2(b). Specifically, the intelligent terminal login method provided in the embodiments of this application may be implemented in different implementations. With reference to a system architecture of an intelligent terminal, the following specifically describes a process of interaction between an Android application layer, an Android application framework layer, and a TEE three-layer architecture to describe in detail an intelligent terminal login method implementation process.

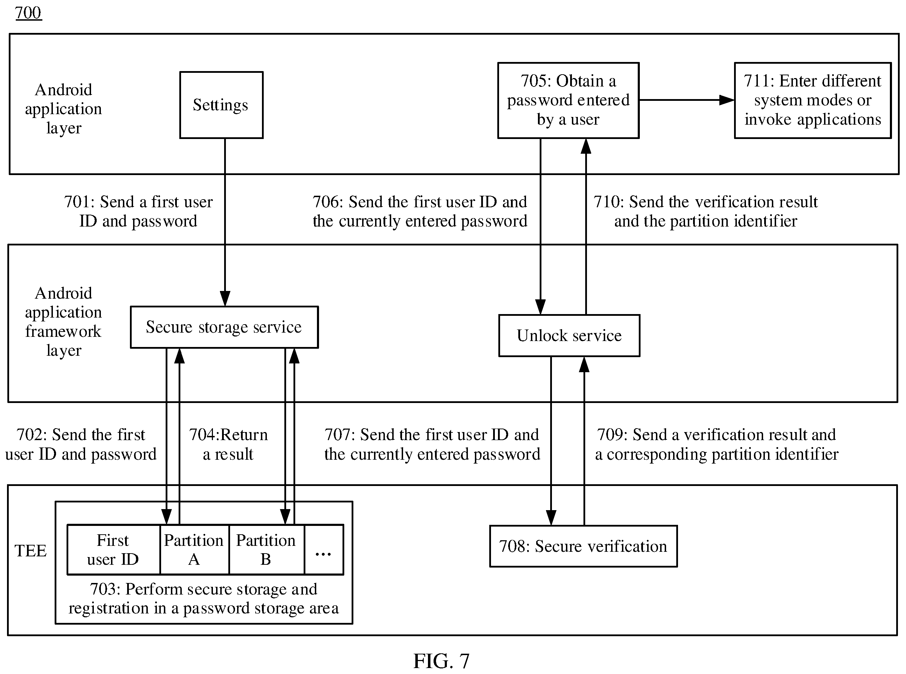

FIG. 7 is a schematic diagram of an implementation process of an intelligent terminal login method according to an embodiment of this application. The method includes the following steps.

701: An Android application layer sends a first user ID and password to an Android application framework layer.

It should be understood that the first user ID in this application may be understood as a user ID in one user space, and a plurality of system modes may be set in the one user space. For example, the first user ID is set to 00 on a tablet device, the user 00 corresponds to one user space, and the user space of the first user ID may include two system modes: a system desktop used for a parent and a secure child desktop used for a child.

702: The Android application framework layer sends the first user ID and password to a TEE.

703: The TEE securely stores and registers the received first user ID and password.

It should be understood that the TEE may provide security protection for data at the application layer, and a security level is higher than that of an Android system layer or rich OS. Therefore, when unlock passwords are set for the system modes included in the user space of the first user ID, the specified unlock passwords need to be sent to the TEE for secure storage and registration.

For example, in this application, the first user password includes an unlock password 123456 for the system desktop used for the parent and an unlock password 654321 for the secure child desktop used for the child. The Android application framework layer separately sends the unlock password 123456, stored in a partition A, of the system desktop used for the parent and the unlock password 654321, stored in a partition B, of the secure child desktop used for the child to the TEE for registration.

It can be understood that TEE registration is establishing a secure storage area in the TEE for the first user ID and securely storing an unlock password. The TEE may allocate a password storage area to the first user ID. It can be understood that the password storage area is specialized in storing the password for the first user ID, for example, storing the unlock password for the system desktop used for the parent and the unlock password for the secure child desktop used for the child.

In this embodiment of this application, the password storage area for the first user ID may be divided into at least two partitions. For example, the password storage area for the first user ID is divided into the partition A and the partition B. The unlock password 123456 for the system desktop used for the parent is stored in the partition A, and the unlock password 654321 for the secure child desktop used for the child is stored in the partition B. A difference from the conventional technology in which an unlock password of only one user can be stored in a user space of one user ID is as follows: In this embodiment of this application, in the user space of the first user ID, unlock passwords of two users (the parent and the child) are respectively stored in two different partitions of one password storage area in the TEE, so that verification can be separately performed on the unlock passwords of the two users in a process of performing unlocking based on password secure verification.

For example, as shown in Table 2, the "parent" user has a unique user identity (user ID) 00, and has a "parent" user space having the user ID 00. The password storage area of the "parent" user space includes the partition A and the partition B. The unlock password 123456 for the system desktop used for the parent is stored in the partition A, and the unlock password 654321 for the secure child desktop used for the child is stored in the partition B. Optionally, in addition to different unlock passwords, identification information used to identify different users may be further stored in the partition A and the partition B. This is not limited in this application.

In addition, in Table 2, storage directories of different applications are further enumerated, data packets related to Camera, Phone, Map, WLAN, Kids Corner, and the like are all stored in the "parent" user space, and data packets related to Fun V English, Arithmetic Online, Picture Learning Pinyin, and Peppa Pig are also stored in the "parent" user space. Different storage directories are obtained through division for different applications in the "parent" user space. For example, data related to Camera is stored in a storage path 00-001, where "00" may be understood as the user ID, and 001 may represent an identifier of Camera; and data related to Kids Corner is stored in a storage path 00-005, where "00" may be understood as the user ID, and 005 may represent an identifier of Kids Corner. In addition, storage paths of applications (for example, Fun V English, Arithmetic Online, Picture Learning Pinyin, and Peppa Pig) on a secure child desktop provided by Kids Corner may be in the storage path 00-005. For example, the data packet related to Fun V English is stored in a storage path of 00-005-001, and so on. Details are not described herein again. In a possible implementation, the unlock password 123456 for the system desktop used for the parent is stored in the partition A. At the Android application layer, the parent, as an administrator user, needs to set an unlock password for the system desktop by using Settings at the Android application layer. Therefore, in the TEE, the data stored in the partition A may include the "parent" user ID 00, an identifier of Settings, and the unlock password 123456 for the system desktop used for the parent. The identifier of Settings may also be referred to as a partition identifier of the partition A, and is used to be associated with Settings at the Android application layer.

Optionally, the unlock password 654321 for the secure child desktop used for the child is stored in the partition B. At the Android application layer, the user may enter the secure child desktop by using "Kids Corner" at the Android application layer. Therefore, in the TEE, the data stored in the partition B may include the "parent" user ID 00, an identifier of "Kids Corner", and the unlock password 654321 for the secure child desktop used for the child. The identifier of "Kids Corner" may also be referred to as a partition identifier of the partition B, and is used to be associated with "Kids Corner". Therefore, when entering the unlock password 654321 for the secure child desktop used for the child, the user directly enters the secure child desktop by using "Kids Corner" at the Android application layer.

**Table 2**

| User | User identity | User space | Password storage area | Application type | Storage directory |
|---|---|---|---|---|---|
| "Parent" user | User ID (00) | "Parent" user space | The password (123456) for the system desktop used for the "parent" is stored in the partition A | Camera | 00-001 |
| | | | | Phone | 00-002 |
| | | | | Map | 00-003 |
| | | | | WLAN | 00-004 |
| | | | | Kids Corner | 00-005 |
| | | | | ... | ... |
| | | | The password (654321) for the secure child desktop used for the "child" is stored in the partition B | Fun V English | 00-005-001 |
| | | | | Arithmetic Online | 00-005-002 |
| | | | | Picture Learning Pinyin | 00-005-003 |
| | | | | Peppa Pig | 00-005-004 |
| | | | | ... | ... |
| ... | ... | ... | ... | ... | ... |

It should be understood that the secure storage and registration in the password storage area of the TEE are a general service regardless of a specific service type. A unique registration ID or partition ID is returned after each successful password registration. A password storage service is distinguishing between different partitions based on different registration IDs or partition IDs.

It should be further understood that a quantity of partitions of the password storage area for the first user is not limited in this application, and a quantity of system modes included in the user space of the first user ID is not limited. Optionally, the quantity of system modes included in the user space of the first user ID may be equal to the quantity of partitions of the password storage area for the first user, and an unlock password for a system mode in the user space is stored in a partition of each password storage area.

704: The TEE returns a result after securely storing and registering the first user ID and password. In other words, the password storage and registration are completed, and then the result is uploaded to the Android application framework layer and the Android application layer.

705: The Android application layer obtains a password currently entered by the user.

For example, as shown in FIG. 4(a) or as shown in FIG. 5(a), the user enters the password, and the Android application layer obtains the password entered by the user.

706: The Android application layer sends the first user ID and the currently entered password to the Android application framework layer to start an unlock service.

707: The Android application framework layer sends the first user ID and the currently entered password to the TEE.

708: The TEE performs secure verification on the currently entered password.

Specifically, the TEE determines the password storage area for the first user ID based on the first user ID, and determines a plurality of partitions included in the password storage area for the first user ID. When secure encryption and decryption verification is performed on the entered password, secure verification may be first performed on the currently entered password by using the unlock password, stored in the partition A, for the system desktop used for the parent. For example, as shown in FIG. 4(a), when the verification succeeds, the tablet device may display the system desktop 402 used for the parent shown in FIG. 4(b).

When the secure verification on the unlock password, stored in the partition A, for the system desktop used for the parent fails, secure verification is performed on the currently entered password by using the unlock password, stored in the partition B, for the secure child desktop used for the child. For example, as shown in FIG. 5(a), when the verification succeeds, the tablet device may display the secure child desktop 502 used for the child shown in FIG. 5(b).

In the foregoing secure verification process, in a user space corresponding to one user ID, secure verification is performed on unlock passwords stored in a plurality of partitions, and any verification result is obtained. It should be understood that, in this application, it is considered by default that the partition A is the "parent" user associated with Settings, and it may be understood that the partition A corresponds to a master user or an administrator user. Therefore, in a secure verification process, secure verification may be preferably performed on an unlock password stored in the partition A, and then verification is sequentially performed on a plurality of partitions such as the partition B and a partition C. Alternatively, a priority is set for each partition, and secure verification is performed on a plurality of partitions in a priority sequence. This is not limited in this application.

709: The TEE returns a verification result and a partition identifier to the Android application framework layer.

710: The Android application framework layer returns the verification result and the partition identifier to the Android application layer.

711: The Android application layer enters different system modes or invokes an application based on the verification result and the partition identifier.

The verification result is obtained by performing the secure verification process in step 707. For example, when the verification in the partition A succeeds, the TEE layer sequentially sends the partition identifier (the identifier of Settings) of the partition A and a verification success event to the Android application framework layer and the Android application layer. The Android application layer determines, based on the obtained verification result and partition identifier, that the verification in the partition A succeeds, in other words, determines that the currently entered password is the unlock password 123456 for the system desktop used for the parent, so that the tablet device can display the system desktop 402 used for the parent shown in FIG. 4(b).

Alternatively, when the verification in the partition A fails and the verification in the partition B succeeds, the TEE layer sequentially sends the partition identifier (the identifier of "Kids Corner") of the partition B and a verification success event to the Android application framework layer and the Android application layer. The Android application layer determines, based on the obtained verification result and partition identifier, that the verification in the partition B succeeds, in other words, determines that the currently entered password is the unlock password for the secure child desktop used for the child, so that the tablet device can display the secure child desktop 502 used for the parent shown in FIG. 5(b).

Alternatively, when the verification in the partition A fails and the verification in the partition B fails, a returned verification result is a verification failure event, and the tablet device is not unlocked.

In the foregoing implementation process, in an unlock password storage process, by extending an original framework in which one user ID corresponds to only one unlock password storage area, a password storage area for one user ID is extended to a plurality of partitions, so that one user ID can support two or more unlock passwords. In a password verification process of an unlock service, a partition identifier and an entered password are sequentially sent to the TEE based on a current user ID, and a specific partition in which unlock password verification succeeds is determined based on different identifiers of partitions that succeed in the password verification, so as to determine different users to perform different processing and enter different system modes or invoke applications, for example, enter the system desktop used for the parent or the secure child desktop used for the child. According to the method, a password storage mechanism and an unlock mechanism of one user ID are extended in a user space corresponding to one user ID, so as to provide different unlock passwords for different users and distinguish between the different users in an unlocking process. Android multi-user switching is not performed in the entire process. This reduces performance consumption of the intelligent terminal, simplifies a user switching operation, shortens a user switching time, and improves user experience.

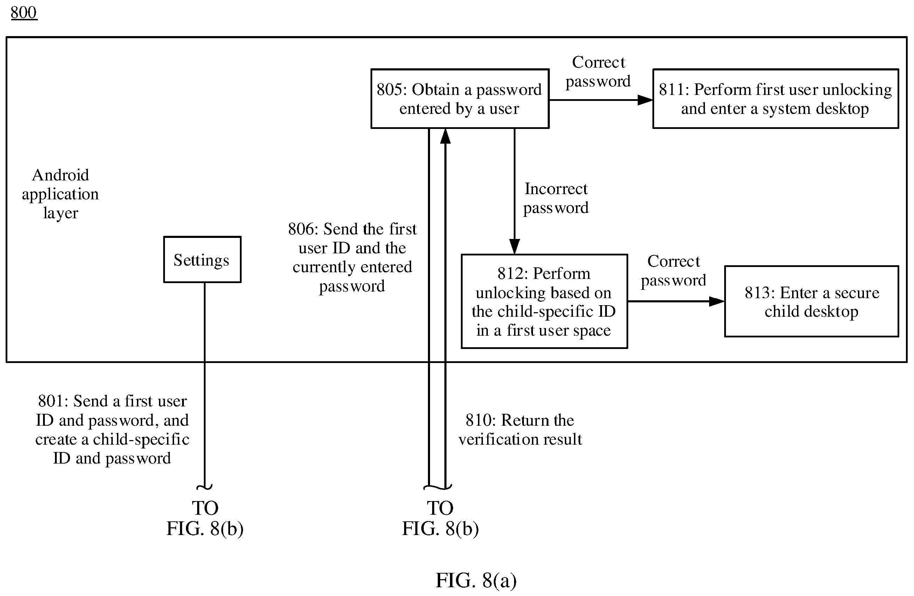

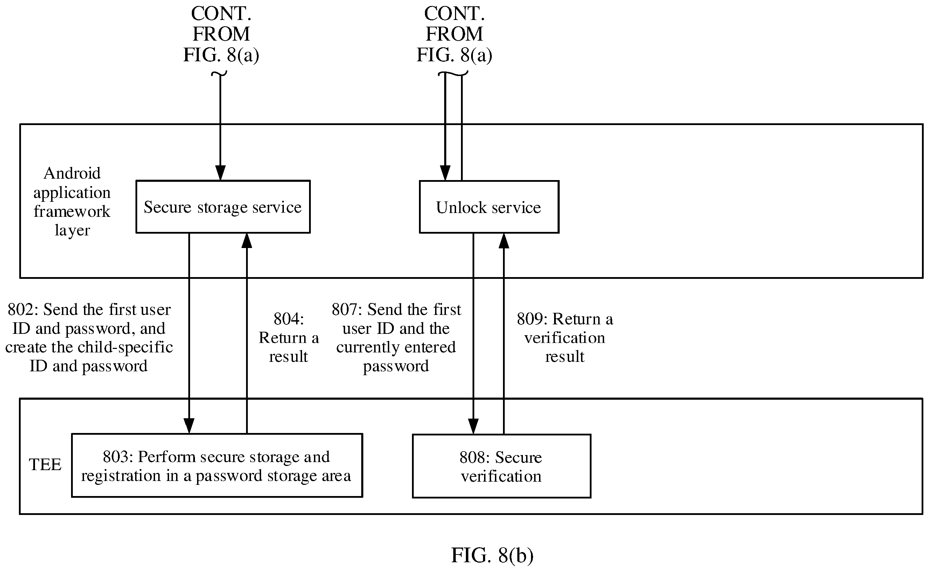

FIG. 8(a) and FIG. 8(b) are a schematic diagram of an implementation process of another intelligent terminal login method according to an embodiment of this application. The method includes the following steps.

801: An Android application layer sends a first user ID and password to an Android application framework layer, and creates a child-specific ID and password.

Specifically, in this application, the first user ID and password may be understood as an ID and an unlock password of a "parent" user serving as a master user. In addition, in step 801, a child-specific ID and an unlock password are also established for a "child" user. For example, for the "parent" user, the ID is 00 and the password is 123456; and for the "child" user, the ID is 1000 and the password is 654321.

It should be understood that, in step 801, the child-specific ID of the "child" user is associated with the ID of the parent serving as the master user. The association herein may be understood as binding two IDs, so as to obtain the unlock password corresponding to the child-specific ID of the "child" user in time for verification when verification on the password corresponding to the ID of the master user fails.

It should be further understood that the child-specific ID is different from an ID that dynamically increases in ascending order in an Android multi-user solution, and this user ID is exclusively used as a child ID and does not overlap with a user ID of another newly added multi-user. For example, in the Android multi-user solution, the ID of the master user is 00. Each time new users are added, IDs may be sequentially 10, 20, 30, 40, and the like. However, in this embodiment of this application, the child-specific ID is fixed to 1000 and does not overlap with a user ID of another newly added multi-user.

802: The Android application framework layer sends the first user ID and password and the created child-specific ID to a TEE.

803: The TEE securely stores and registers the received first user ID and password and the received child-specific ID and password.

The TEE stores a password by using an existing password storage mechanism in a multi-user mode, in other words, creates a password storage area for a user ID and stores a corresponding unlock password. Specifically, the TEE registers the "parent" user ID 00 and stores the password 123456 in a first password storage area, and registers the "child" user ID 1000 and stores the password 654321 in a second password storage area.

Optionally, the first password storage area and the second password storage area may be a same password storage area. This is not limited in this application.

For example, as shown in Table 3, the "parent" user has the unique user identity (user ID) 00, and the "child" user has the child-specific user ID 1000. In addition, the user ID 1000 of the "child" user is associated with the user ID 00 of the "parent" user, and the two user IDs share one "parent" user space having the user ID 00. Therefore, when the verification on the unlock password 654321 used by the "child" user succeeds, the secure child desktop may be directly entered.

In addition, in Table 3, storage directories of different applications are further enumerated, data packets related to Camera, Phone, Map, WLAN, Kids Corner, and the like are all stored in the "parent" user space, and data packets related to Fun V English, Arithmetic Online, Picture Learning Pinyin, and Peppa Pig are also stored in the "parent" user space. Different storage directories are obtained through division for different applications in the "parent" user space. For specific storage path descriptions, refer to the related descriptions in Table 2. Details are not described herein again.

**Table 3**

| User | User identity | Password storage service | User space | Application type | Storage directory |
|---|---|---|---|---|---|
| "Parent" user | User ID 1 (00) | Store the "parent" password (123456) | "Parent" user space | Camera | 00-001 |
| | | | | Phone | 00-002 |
| | | | | Map | 00-003 |
| | | | | WLAN | 00-004 |
| | | | | Kids Corner | 00-005 |
| | | | | ... | ... |
| | | | | **Fun V English** | **00-005-001** |
| | | | | **Arithmetic Online** | **00-005-002** |
| | | | | **Picture Learning Pinyin** | **00-005-003** |
| | | | | **Peppa Pig** | **00-005-004** |
| | | | | ... | ... |
| "Child" user | User ID 2 (1000) | Store the "child" password (654321) | "Child" user space | | |
| ... | ... | ... | ... | ... | ... |

It should be understood that a difference from the password storage mechanism in step 703 in FIG. 7 is as follows: Both the unlock password of the "parent" user and the unlock password of the "child" user in step 703 are stored in one user space corresponding to one ID (the ID of the "parent" user), but in step 803, the unlock password of the "parent" user corresponds to the current user ID 00, and the unlock password of the "child" user corresponds to the child-specific ID 1000 of the "child" user. It should be further understood that, in an unlock password storage process, the ID of the "parent" user and the unlock password of the "parent" user are stored in pairs, and the ID of the "child" user and the unlock password of the "child" user are stored in pairs.

804: The TEE returns a result after securely storing and registering the first user ID and password and the child-specific ID and password. In other words, the password storage and registration are completed, and then the result is uploaded to the Android application framework layer and the Android application layer.

805: The Android application layer obtains a password currently entered by the user.

806: The Android application layer sends the first user ID and the currently entered password to the Android application framework layer to start an unlock service.

807: The Android application framework layer sends the first user ID and the currently entered password to the TEE.

808: The TEE performs secure verification on the currently entered password.

Specifically, the TEE determines, based on the first user ID, the first password storage area corresponding to the first user ID, and performs secure verification on the currently entered password by using the unlock password in the first password storage area.

809: The TEE returns a verification result to the Android application framework layer.

810: The Android application framework layer returns the verification result to the Android application layer.

811: When the verification on the first user ID and the entered password succeeds, the Android application layer successfully performs first user unlocking and enters a system desktop used for the parent.

Specifically, when the verification performed on the currently entered password based on the first password storage area corresponding to the first user ID succeeds, the TEE returns a verification result, in other words, sequentially sends a verification success event of the first password storage area to the Android application framework layer and the Android application layer. The Android application layer determines, based on the obtained verification result, that the verification succeeds, in other words, determines that the currently entered password is the unlock password for the system desktop used for the parent, so that the tablet device can display the system desktop 402 used for the parent shown in FIG. 4(b).

812: When the verification on the first user ID and the entered password fails, invoke the child-specific ID and the password in the first user space to perform verification.

813: When the verification on the child-specific ID and the password succeeds, enter the secure child desktop used for the child.

Alternatively, when the verification performed by the TEE on the currently entered password based on the unlock password stored in the first password storage area corresponding to the first user ID fails, the TEE returns a verification result, in other words, sequentially sends a verification failure event to the Android application framework layer and the Android application layer. The Android application layer determines that the verification fails, in other words, determines that the currently entered password is not the unlock password for the system desktop used for the parent. In this case, the Android application layer directly continues to perform secure verification on the currently entered password based on the unlock password stored in the second password storage area corresponding to the child-specific ID in the TEE. When the verification succeeds, the Android application layer determines that the currently entered password is the unlock password for the secure child desktop used for the child, so that the tablet device can display the system desktop 502 used for the parent shown in FIG. 5(b).

In the foregoing implementation process, in an unlock password storage process, a password storage area corresponding to a specific user ID (a child-specific ID) is created in the TEE to store a corresponding unlock password for the secure child desktop. In a password verification process of an unlock service, a secure verification process is added to a procedure of unlocking the ID of the first user (the master user or the "parent" user). Specifically, after the first user ID fails in normal unlocking, secure verification is invoked on the password of the child-specific ID. If the verification succeeds, the secure child desktop used for the child is directly entered. Implementation of the foregoing method does not affect normal password unlock performance of the master user, and can also implement a case in which the secure child desktop used for the child is directly entered by performing unlocking based on the child-specific ID. This meets a requirement of a plurality of users for one tablet device. In addition, for a user space created based on the child-specific ID, only a process of storing an unlock password in an Android multi-user solution is used, and the user space is not used by the user. In the entire process, Android multi-user switching is not performed, and the child-specific ID and password are delivered in the user space of the master user for verification and unlocking. This reduces performance consumption of the intelligent terminal, simplifies a user switching operation, shortens a user switching time, and improves user experience.

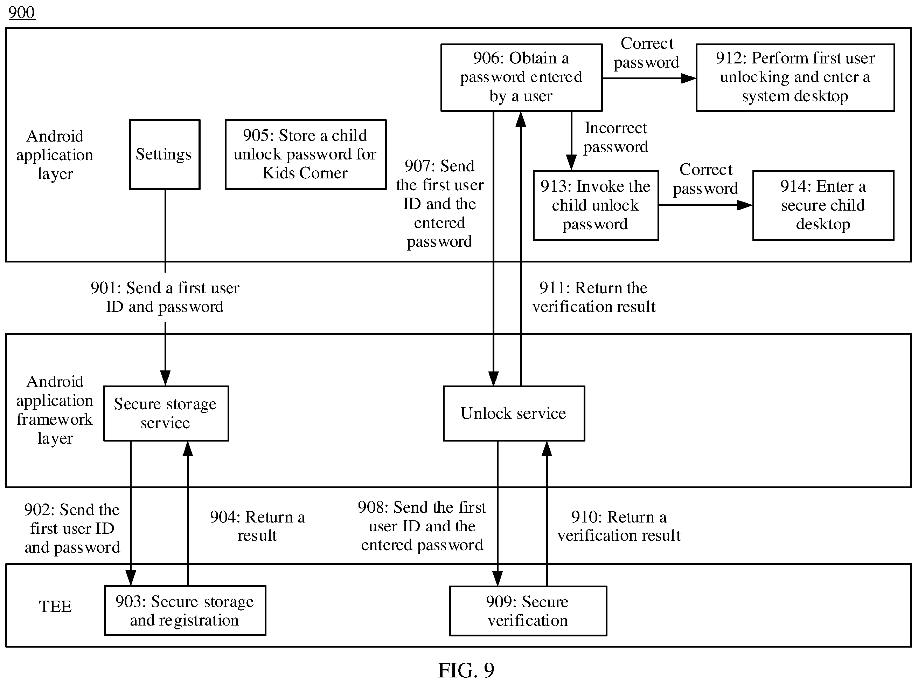

FIG. 9 is a schematic diagram of an implementation process of another intelligent terminal login method according to an embodiment of this application. The method includes the following steps.

901: An Android application layer sends a first user ID and password to an Android application framework layer.

902: The Android application framework layer sends the first user ID and password to a TEE.

903: The TEE securely stores and registers the received first user ID and password.

904: The TEE returns a result after securely storing and registering the first user ID and password. In other words, the password storage and registration are completed, and then the result is uploaded to the Android application framework layer and the Android application layer.

For the foregoing process, refer to the unlock password storage processes described in FIG. 7 and FIG. 8(a) and FIG. 8(b). For brevity, details are not described herein again.

905: Store a child unlock password for Kids Corner at the Android application layer.

It should be understood that, in this embodiment, a difference from FIG. 7 and FIG. 8(a) and FIG. 8(b) is that encryption and decryption services are implemented inside Kids Corner at the Android application layer.

Specifically, the child unlock password may be encrypted and stored in an application database of Kids Corner; or the child unlock password may be encrypted and stored in an extensible markup language (extensible markup language, XML) of Kids Corner; or the child unlock password may be encrypted and stored in SharedPreferences, where SharedPreferences is defined in an Android system; or the child unlock password may be encrypted and stored in a system database, where the system database is a system shared database that is open to read by various applications; or the child unlock password may be encrypted and stored in the TEE, and the child unlock password encrypted and stored in the TEE is enabled to be associated with Kids Corner. In addition, Kids Corner internally provides an unlock interface. Therefore, when normal unlocking of the first user ID fails, the internal unlock interface of Kids Corner is directly invoked to perform password secure verification.

For example, as shown in Table 4, the "parent" user has a unique user identity (user ID) 00, and has a "parent" user space having the user ID 00. In addition, an unlock password 123456 of the parent is stored in a password storage area of the "parent" user space, a child unlock password 654321 is stored for Kids Corner, and the child unlock password stored for Kids Corner is associated with the unlock password of the parent. When normal unlocking performed by the parent fails, the internal unlock interface of Kids Corner is directly invoked to perform password secure verification, so that the secure child desktop can be directly entered when the verification on the unlock password 654321 used by the "child" user succeeds.

**Table 4**

| User | User identity | Password storage service | User space | Application type | Storage directory | | |
|---|---|---|---|---|---|---|---|
| "Parent" user | User ID 1 (00) | Store the "parent" password (123456) | "Parent" user space | Camera | 00-001 | | |
| | | | | Phone | 00-002 | | |
| | | | | Map | 00-003 | | |
| | | | | WLAN | 00-004 | | |
| | | | | Kids Corner-Store the "child" password (654321) | 00-005 | Fun V English | 00-005-001 |
| | | | | | | Arithmetic Online | 00-005-002 |
| | | | | | | Picture Learning Pinyin | 00-005-003 |
| | | | | | | Peppa Pig | 00-005-004 |
| | | | | | | ... | ... |
| | | | | ... | ... | | |

906: The Android application layer obtains a password currently entered by the user.

907: The Android application layer sends the first user ID and the currently entered password to the Android application framework layer to start an unlock service.

908: The Android application framework layer sends the first user ID and the currently entered password to the TEE.

909: The TEE performs secure verification on the currently entered password.

910: The TEE returns a verification result to the Android application framework layer.

911: The Android application framework layer returns the verification result to the Android application layer.

912: When the verification on the first user ID and the entered password succeeds, the Android application layer successfully performs first user unlocking and enters a system desktop used for the parent.

For a password verification process of an unlock service in steps 906 to 912, refer to the related descriptions in FIG. 7 or FIG. 8(a) and FIG. 8(b). For brevity, details are not described herein again.

913: When the verification on the first user ID and the entered password fails, invoke the child-specific ID and the password in the first user space to perform verification.

914: When the verification on the child-specific ID and the password succeeds, enter the secure child desktop used for the child.

Specifically, when the verification on the first user ID and password fails, the system desktop used for the parent is not entered, but the unlock interface internally provided by Kids Corner is directly invoked and secure verification is performed on the currently entered password based on the internal unlock interface of Kids Corner and the unlock password (the child unlock password stored in step 905) stored for Kids Corner. When the verification succeeds, the tablet device may display the secure child desktop 502 used for the child shown in FIG. 5(b). When the verification fails, a returned verification result is a verification failure event, and the tablet device is not unlocked.

In the foregoing implementation process, switching between different system modes of a same device for two users does not need to be implemented by setting a user ID or a user space, and an unlock service is internally implemented only by using a secure child desktop application (for example, Kids Corner) at an Android application layer. In a password verification process of the unlock service, after the ID of the master user fails in normal unlocking, an unlock interface provided by the secure child desktop application is directly invoked to perform child unlock password verification. If the password verification succeeds, unlocking is implemented and the secure child desktop used for the child is directly entered. In the entire process, Android multi-user switching is not performed, only an internal application unlock interface needs to be added to the Android application layer, and the child-specific ID and password are delivered in the user space of the master user for verification and unlocking, so that switching between different system modes of a same device for two users can be implemented. This reduces performance consumption of the intelligent terminal, simplifies a user switching operation, shortens a user switching time, and improves user experience.

In conclusion, in this application, for a scenario in which different users use a same intelligent terminal, different unlock passwords are provided for the users, and different processing is performed for the different unlock passwords by using different implementations, so as to meet use requirements of the different users. This avoids a cumbersome operation in a user switching process in an existing Android multi-user solution, and reduces performance consumption of the intelligent terminal. In addition, the method has a low performance requirement on the intelligent terminal, can be used on both high-end and low-end intelligent terminals, can ensure user data interaction between different users in a same user space, and improve user experience.

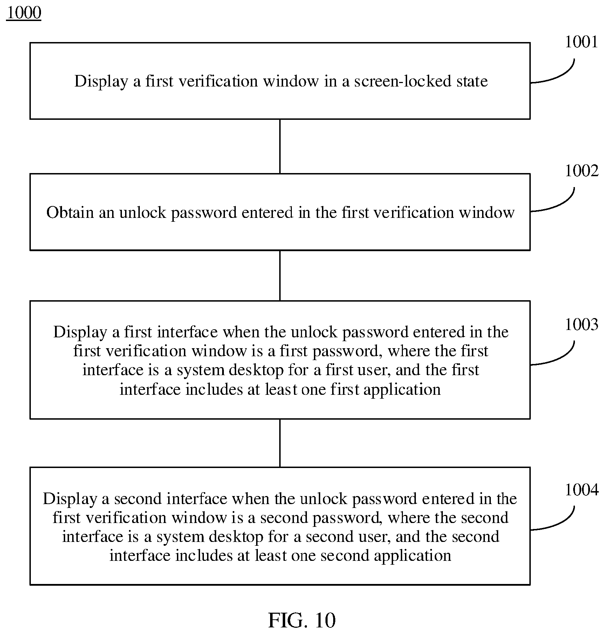

With reference to the foregoing embodiments and related accompanying drawings, an embodiment of this application provides an intelligent terminal login method. The method may be implemented by the electronic device (for example, a mobile phone or a tablet device) having the camera in FIG. 1 and FIG. 2(a) and FIG. 2(b). FIG. 10 is a schematic flowchart of an intelligent terminal login method according to an embodiment of this application. As shown in FIG. 10, the method may include the following steps.

1001: Display a first verification window in a screen-locked state.

1002: Obtain an unlock password entered in the first verification window.

For example, as shown in FIG. 4(a), the first verification window may be an unlock password input window for unlocking the tablet device.

Alternatively, for example, as shown in FIG. 5(a), the first verification window may be an unlock password input window for unlocking the tablet device.

It should be understood that, after a user triggers a power button to turn on a screen display system, the unlock password verification window may be displayed in the screen-locked mode of the tablet device, and the user may enter an unlock password.

1003: Display a first interface when the unlock password entered in the first verification window is a first password, where the first interface is a system desktop for a first user, and the first interface includes at least one first application.

For example, the first password may be an unlock password of a "parent" user. When the unlock password entered by the user in the first verification window is the unlock password 123456 of the "parent" user, the electronic device may display the first interface shown in FIG. 4(b), and the first interface is the system desktop 402 displayed after the tablet device is unlocked. The first interface may include a plurality of applications used by the parent, for example, Contacts, Messages, Alipay, Task card store, Gallery, WeChat, Cards, Settings, Camera, Email, Videos, Stocks, Browser, and Kids Corner, which are referred to as first applications.

In a possible implementation, when displaying the first interface, the electronic device may receive a second operation, where the second operation is a tap operation performed on the first application on the first interface; and display the second interface in response to the second operation.

Optionally, the first application is Kids Corner.

For example, the second operation may be an operation of tapping Kids Corner shown in FIG. 4(b). Specifically, the electronic device displays the system desktop used for the parent shown in FIG. 4(b). The desktop includes Kids Corner. When the user taps Kids Corner, the electronic device directly enters the secure child desktop shown in FIG. 5(c).

1004: Display the second interface when the unlock password entered in the first verification window is a second password, where the second interface is a system desktop for a second user, and the second interface includes at least one second application.

The first password is different from the second password, the at least one first application and the at least one second application are all stored in a user space having a first user identity ID, and the first user identity ID is used to identify the first user.

For example, the second password may be an unlock password of a "child" user. When the unlock password entered by the user in the first verification window is the unlock password 654321 of the "child" user, the electronic device may display the second interface shown in FIG. 5(b), and the second interface is the secure child desktop 502 used for the "child" user after the tablet device is unlocked. The second interface may include a plurality of applications used by the child, for example, Fun V English, Arithmetic Online, Picture Learning Pinyin, and Peppa Pig, which are referred to as second applications.

In a possible implementation, when the electronic device displays the second interface, the electronic device may receive a first operation; display a second verification window in an unlocked state in response to the first operation; obtain a switching password entered in the second verification window; and display the first interface when the switching password entered in the second verification window is a third password.

For example, the first operation may be an operation of tapping "Exit the secure child desktop" shown in FIG. 5(b). Specifically, when the electronic device displays the secure child desktop shown in FIG. 5(b), and the user taps the exit control 20 or the option "Log out" 40, the electronic device displays the second verification window shown in FIG. 5(c). It should be understood that the second verification window is used to enter a switching password, which is referred to as a "third password". The third password may verify whether the system desktop used for the "parent" user can be entered.

In a possible implementation, the third password is the same as the first password. Specifically, the switching password and the unlock password of the "parent" user may be same, for example, both are 123456. When the switching password verification fails, the tablet device does not jump to the system desktop 504 shown in FIG. 5(d).

According to the foregoing intelligent terminal login method, in a same user space, the secure child desktop may be entered from the system desktop by tapping a child desktop application (for example, Kids Corner), or the system desktop may be entered from the secure child desktop of the "child" user after switching password verification, and a complete data record can be viewed without performing an Android multi-user switching operation. This simplifies operation steps, shortens an operation time, implements quick view of use data of another user, and improves user experience.

Specifically, in an actual use process, the parent may directly enter the secure child desktop from the system desktop to view device use details of the child or view complete use data of the child for the tablet device, user switching between a system mode of the parent and a secure desktop mode of the child is not performed, and the system mode of the parent and the secure desktop mode of the child correspond to a same user space. This is simple and less time-consuming, and consumes less performance of the tablet device.

It can be understood that, to implement the foregoing functions, the electronic device includes corresponding hardware and/or software modules for performing the functions. With reference to algorithm steps of each example described in the embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to the embodiments, but it should not be considered that the implementation goes beyond the scope of this application.

In the embodiments, the electronic device may be divided into function modules based on the foregoing method examples. For example, each function module corresponding to each function may be obtained through division, or two or more functions may be integrated into one processing module. The integrated module may be implemented in a form of hardware. It should be noted that, in the embodiments, division into modules is an example, and is merely logical function division. During actual implementation, there may be another division manner.

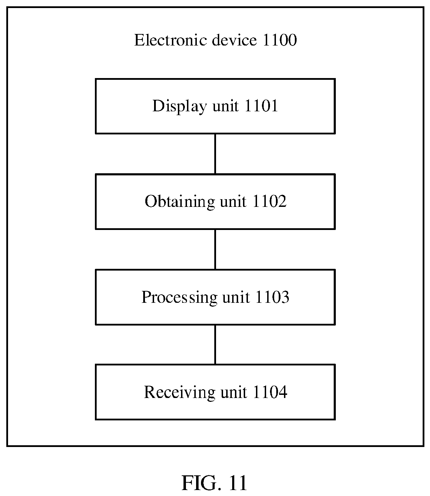

When function modules are obtained through division by using corresponding functions, FIG. 11 is a schematic diagram of possible composition of an electronic device 1100 related to the foregoing embodiments. As shown in FIG. 11, the electronic device 1100 may include a display unit 1101, an obtaining unit 1102, a processing unit 1103, and a receiving unit 1104.

The display unit 1101 may be configured to support the electronic device 1100 in performing step 1001, step 1003, step 1004, and the like, and/or another process of the technology described in this specification.

The obtaining unit 1102 may be configured to support the electronic device 1100 in performing step 1002 and the like, and/or another process of the technology described in this specification.

The processing unit 1103 may be configured to support the electronic device 1100 in performing a process of determining the unlock password entered in the first verification window in step 1003, step 1004, and the like, and/or another process of the technology described in this specification.

The receiving unit 1104 may be configured to support the electronic device 1100 in receiving a user operation such as a first operation or a second operation, and/or another process of the technology described in this specification.

It should be noted that all related content of the steps in the foregoing method embodiments may be cited in function descriptions of corresponding function modules. Details are not described herein again.

The electronic device provided in this embodiment is configured to perform the intelligent terminal login method. Therefore, an effect same as that of the foregoing implementation methods can be achieved.

When an integrated unit is used, the electronic device may include a processing module, a storage module, and a communications module. The processing module may be configured to control and manage actions of the electronic device, for example, may be configured to support the electronic device in performing the steps performed by the display unit 1101, the obtaining unit 1102, the processing unit 1103, and the receiving unit 1104. The storage module may be configured to support the electronic device in storing program code, data, and the like. The communications module may be configured to support communication between the electronic device and another device.

The processing module may be a processor or a controller. The processing module may implement or execute various example logical blocks, modules, and circuits described with reference to content disclosed in this application. The processor may alternatively be a combination of processors implementing a calculation function, for example, a combination of one or more microprocessors or a combination of a digital signal processor (digital signal processor, DSP) and a microprocessor. The storage module may be a memory. The communications module may be specifically a device, for example, a radio frequency circuit, a Bluetooth chip, or a Wi-Fi chip, that interacts with another electronic device.

In an embodiment, when the processing module is a processor and the storage module is a memory, the electronic device in this embodiment may be a device having the structure shown in FIG. 1.

An embodiment further provides a computer storage medium. The computer storage medium stores computer instructions. When the computer instructions are run on an electronic device, the electronic device is enabled to perform the related method steps to implement the intelligent terminal login method in the foregoing embodiments.

An embodiment further provides a computer program product. When the computer program product is run on a computer, the computer is enabled to perform the foregoing related steps to implement the intelligent terminal login method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the intelligent terminal login method in the foregoing method embodiments.

The electronic device, the computer storage medium, the computer program product, or the chip provided in the embodiments is configured to perform the corresponding method provided above. Therefore, for beneficial effects that can be achieved, refer to the beneficial effects in the corresponding method provided above. Details are not described herein again.

According to the descriptions of the foregoing implementations, a person skilled in the art may understand that, for the purpose of convenient and brief description, division into the foregoing function modules is used as an example for illustration. During actual application, the foregoing functions may be allocated to different function modules and implemented according to a requirement, in other words, an inner structure of an apparatus is divided into different function modules to implement all or some of the functions described above.

In the several embodiments provided in this application, it should be understood that the disclosed apparatus and method may be implemented in another manner. For example, the described apparatus embodiment is merely an example. For example, the module or unit division is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical or other forms.

The units described as separate parts may or may not be physically separate, and parts displayed as units may be one or more physical units, in other words, may be located in one place, or may be distributed on different places. Some or all of the units may be selected according to an actual requirement to achieve an objective of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A user login method, wherein the method is applied to an electronic device, and comprises:
displaying (1001) a first verification interface in a screen-locked state;
obtaining (1002) an unlock password when displaying the first verification interface; and
displaying (1003) a first interface when the unlock password is a first password, wherein the first interface is a system desktop for a first user, and the first interface comprises at least one first application; or displaying (1004) a second interface when the unlock password is a second password, wherein the second interface is a system desktop for a second user, and the second interface comprises at least one second application, wherein
the first password is different from the second password, the at least one first application and the at least one second application are all stored in a user space having a first user identity ID, and the first user identity ID is used to identify the first user,
wherein the method further comprises:
storing the first password and the first user identity ID in a first password storage area;
storing the second password and a second user identity ID in a second password storage area, wherein the second user identity ID is used to identify the second user, and the first password storage area and the second password storage area are password storage areas in the user space having the first user identity ID; and
when the unlock password is not the first password stored in the first password storage area, detecting whether the unlock password is the second password stored in the second password storage area.

2. A user login method, wherein the method is applied to an electronic device, and comprises:
displaying (1001) a first verification interface in a screen-locked state;
obtaining (1002) an unlock password when displaying the first verification interface; and
displaying (1003) a first interface when the unlock password is a first password, wherein the first interface is a system desktop for a first user, and the first interface comprises at least one first application; or displaying (1004) a second interface when the unlock password is a second password, wherein the second interface is a system desktop for a second user, and the second interface comprises at least one second application, wherein
the first password is different from the second password, the at least one first application and the at least one second application are all stored in a user space having a first user identity ID, and the first user identity ID is used to identify the first user,
wherein the method further comprises:
storing the first password and the first user identity ID in a first password storage area;
storing the second password and a second user identity ID in a second password storage area, wherein the second user identity ID is used to identify the second user, the second password storage area is a dedicated password storage area for the second user, and the second password storage area is associated with the first password storage area; and
when the unlock password is not the first password stored in the first password storage area, detecting whether the unlock password is the second password stored in the second password storage area.

3. A user login method, wherein the method is applied to an electronic device, and comprises:
displaying (1001) a first verification interface in a screen-locked state;
obtaining (1002) an unlock password when displaying the first verification interface; and
displaying (1003) a first interface when the unlock password is a first password, wherein the first interface is a system desktop for a first user, and the first interface comprises at least one first application; or displaying (1004) a second interface when the unlock password is a second password, wherein the second interface is a system desktop for a second user, and the second interface comprises at least one second application, wherein
the first password is different from the second password, the at least one first application and the at least one second application are all stored in a user space having a first user identity ID, and the first user identity ID is used to identify the first user,
wherein the method further comprises:
storing the first password and the first user identity ID in a first password storage area;
storing the second password in an application database of the first application, wherein the second password is associated with the first password; and
when the unlock password is not the first password stored in the first password storage area, detecting whether the unlock password is the second password.

4. The method according to any one of claims 1-3, wherein when the electronic device displays the second interface, the method further comprises:
receiving a first operation;
displaying a second verification window in an unlocked state in response to the first operation;
obtaining a switching password entered in the second verification window; and
displaying the first interface when the switching password entered in the second verification window is a third password.

5. The method according to claim 4, wherein the third password is the same as the first password.

6. The method according to any one of claims 1 to 5, wherein when the electronic device displays the first interface, the method further comprises:
receiving a second operation, wherein the second operation is a tap operation performed on the first application on the first interface; and
displaying the second interface in response to the second operation.

7. The method according to claim 6, wherein the first application is Kids Corner.

8. An electronic device, comprising one or more processors, a memory, a plurality of applications, and one or more programs, wherein the one or more programs are stored in the memory, and when the one or more programs are executed by the processor, the electronic device is enabled to perform the method according to any one of claims 1-7.

9. A computer storage medium, comprising computer instructions, wherein when the computer instructions are run on an electronic device, the electronic device is enabled to perform the method according to any one of claims 1 to 7.

## Patentansprüche

1. Benutzeranmeldeverfahren, wobei das Verfahren auf eine elektronische Vorrichtung angewendet wird und Folgendes umfasst:
Anzeigen (1001) einer ersten Verifikationsoberfläche in einem Bildschirm-gesperrt-Zustand;
Erhalten (1002) eines Entsperrungspassworts, wenn die erste Verifikationsoberfläche angezeigt wird; und
Anzeigen (1003) einer ersten Oberfläche, wenn das Entsperrungspasswort ein erstes Passwort ist, wobei die erste Oberfläche ein System-Desktop für einen ersten Benutzer ist und die erste Oberfläche mindestens eine erste Anwendung umfasst; oder Anzeigen (1004) einer zweiten Oberfläche, wenn das Entsperrungspasswort ein zweites Passwort ist, wobei die zweite Oberfläche ein System-Desktop für einen zweiten Benutzer ist und die zweite Oberfläche mindestens eine zweite Anwendung umfasst, wobei sich das erste Passwort von dem zweiten Passwort unterscheidet, die mindestens eine erste Anwendung und die mindestens eine zweite Anwendung alle in einem Benutzerraum mit einer ersten Benutzerkennung ID gespeichert sind und die erste Benutzerkennung ID zum Identifizieren des ersten Benutzers verwendet wird,
wobei das Verfahren ferner Folgendes umfasst:
Speichern des ersten Passworts und der ersten Benutzerkennung ID in einem ersten Passwortspeicherbereich;
Speichern des zweiten Passworts und einer zweiten Benutzerkennung ID in einem zweiten Passwortspeicherbereich, wobei die zweite Benutzerkennung ID zum Identifizieren des zweiten Benutzers verwendet wird und der erste Passwortspeicherbereich und der zweite Passwortspeicherbereich Passwortspeicherbereiche in dem Benutzerraum mit der ersten Benutzerkennung ID sind; und
wenn das Entsperrungspasswort nicht das in dem ersten Passwortspeicherbereich gespeichert erste Passwort ist, Detektieren, ob das Entsperrungspasswort das in dem zweiten Passwortspeicherbereich gespeicherte zweite Passwort ist.

2. Benutzeranmeldeverfahren, wobei das Verfahren auf eine elektronische Vorrichtung angewendet wird und Folgendes umfasst:
Anzeigen (1001) einer ersten Verifikationsoberfläche in einem Bildschirm-gesperrt-Zustand;
Erhalten (1002) eines Entsperrungspassworts, wenn die erste Verifikationsoberfläche angezeigt wird; und
Anzeigen (1003) einer ersten Oberfläche, wenn das Entsperrungspasswort ein erstes Passwort ist, wobei die erste Oberfläche ein System-Desktop für einen ersten Benutzer ist und die erste Oberfläche mindestens eine erste Anwendung umfasst; oder Anzeigen (1004) einer zweiten Oberfläche, wenn das Entsperrungspasswort ein zweites Passwort ist, wobei die zweite Oberfläche ein System-Desktop für einen zweiten Benutzer ist und die zweite Oberfläche mindestens eine zweite Anwendung umfasst, wobei sich das erste Passwort von dem zweiten Passwort unterscheidet, die mindestens eine erste Anwendung und die mindestens eine zweite Anwendung alle in einem Benutzerraum mit einer ersten Benutzerkennung ID gespeichert sind und die erste Benutzerkennung ID zum Identifizieren des ersten Benutzers verwendet wird,
wobei das Verfahren ferner Folgendes umfasst:
Speichern des ersten Passworts und der ersten Benutzerkennung ID in einem ersten Passwortspeicherbereich;
Speichern des zweiten Passworts und einer zweiten Benutzerkennung ID in einem zweiten Passwortspeicherbereich, wobei die zweite Benutzerkennung ID zum Identifizieren des zweiten Benutzers verwendet wird, der zweite Passwortspeicherbereich ein dedizierter Passwortspeicherbereich für den zweiten Benutzer ist und der zweite Passwortspeicherbereich mit dem ersten Passwortspeicherbereich assoziiert ist; und
wenn das Entsperrungspasswort nicht das in dem ersten Passwortspeicherbereich gespeichert erste Passwort ist, Detektieren, ob das Entsperrungspasswort das in dem zweiten Passwortspeicherbereich gespeicherte zweite Passwort ist.

3. Benutzeranmeldeverfahren, wobei das Verfahren auf eine elektronische Vorrichtung angewendet wird und Folgendes umfasst:
Anzeigen (1001) einer ersten Verifikationsoberfläche in einem Bildschirm-gesperrt-Zustand;
Erhalten (1002) eines Entsperrungspassworts, wenn die erste Verifikationsoberfläche angezeigt wird; und
Anzeigen (1003) einer ersten Oberfläche, wenn das Entsperrungspasswort ein erstes Passwort ist, wobei die erste Oberfläche ein System-Desktop für einen ersten Benutzer ist und die erste Oberfläche mindestens eine erste Anwendung umfasst; oder Anzeigen (1004) einer zweiten Oberfläche, wenn das Entsperrungspasswort ein zweites Passwort ist, wobei die zweite Oberfläche ein System-Desktop für einen zweiten Benutzer ist und die zweite Oberfläche mindestens eine zweite Anwendung umfasst, wobei sich das erste Passwort von dem zweiten Passwort unterscheidet, die mindestens eine erste Anwendung und die mindestens eine zweite Anwendung alle in einem Benutzerraum mit einer ersten Benutzerkennung ID gespeichert sind und die erste Benutzerkennung ID zum Identifizieren des ersten Benutzers verwendet wird,
wobei das Verfahren ferner Folgendes umfasst:
Speichern des ersten Passworts und der ersten Benutzerkennung ID in einem ersten Passwortspeicherbereich;
Speichern des zweiten Passworts in einer Anwendungsdatenbank der ersten Anwendung, wobei das zweite Passwort mit dem ersten Passwort assoziiert ist; und
wenn das Entsperrungspasswort nicht das in dem ersten Passwortspeicherbereich gespeichert erste Passwort ist, Detektieren, ob das Entsperrungspasswort das zweite Passwort ist.

4. Verfahren nach einem der Ansprüche 1 bis 3, wobei das Verfahren, wenn die elektronische Vorrichtung die zweite Oberfläche anzeigt, ferner Folgendes umfasst:
Empfangen eines ersten Bedienvorgangs;
Anzeigen eines zweiten Verifikationsfensters in einem entsperrten Zustand als Reaktion auf den ersten Bedienvorgang;
Erhalten eines in dem zweiten Verifikationsfenster eingegebenen Wechselpassworts; und
Anzeigen der ersten Oberfläche, wenn das in dem zweiten Verifikationsfenster eingegebene Wechselpasswort ein drittes Passwort ist.

5. Verfahren nach Anspruch 4, wobei das dritte Passwort das gleiche wie das erste Passwort ist.

6. Verfahren nach einem der Ansprüche 1 bis 5, wobei das Verfahren, wenn die elektronische Vorrichtung die erste Oberfläche angezeigt, ferner Folgendes umfasst: Empfangen eines zweiten Bedienvorgangs, wobei der zweite Bedienvorgang ein an der ersten Anwendung auf der ersten Oberfläche durchgeführter Antippbedienvorgang ist; und
Anzeigen der zweiten Oberfläche als Reaktion auf den zweiten Bedienvorgang.

7. Verfahren nach Anspruch 6, wobei die erste Anwendung Kids Corner ist.

8. Elektronische Vorrichtung, umfassend einen oder mehrere Prozessoren, einen Speicher, mehrere Anwendungen und ein oder mehrere Programme, wobei das eine oder die mehreren Programme in dem Speicher gespeichert sind und eine Ausführung des einen oder der mehreren Programme durch den Prozessor ermöglicht, dass die elektronische Vorrichtung das Verfahren nach einem der Ansprüche 1-7 durchführt.

9. Computerspeichermedium, umfassend Computeranweisungen, wobei eine Ausführung der Computeranweisungen auf einer elektronischen Vorrichtung ermöglicht, dass die elektronische Vorrichtung das Verfahren nach einem der Ansprüche 1 bis 7 durchführt.

## Revendications

1. Procédé d'ouverture de session d'utilisateur, le procédé étant appliqué à un dispositif électronique, et comportant :
l'affichage (1001) d'une première interface d'authentification dans un état d'écran verrouillé :
l'obtention (1002) d'un mot de passe de déverrouillage lors de l'affichage de la première interface d'authentification ; et
l'affichage (1003) d'une première interface lorsque le mot de passe de déverrouillage est un premier mot de passe, la première interface étant un bureau de système pour un premier utilisateur, et la première interface comportant au moins une première application; ou l'affichage (1004) d'une seconde interface lorsque le mot de passe de déverrouillage est un deuxième mot de passe, la seconde interface étant un bureau de système pour un deuxième utilisateur, et la seconde interface comportant au moins une seconde application,
le premier mot de passe étant différent du deuxième mot de passe, la ou les premières applications et la ou les secondes applications étant toutes stockées dans un espace d'utilisateur doté d'une première identité, ID, d'utilisateur, et la première identité, ID, d'utilisateur étant utilisée pour identifier le premier utilisateur,
le procédé comportant en outre :
le stockage du premier mot de passe et de la première identité, ID, d'utilisateur dans une première zone de stockage de mots de passe ;
le stockage du deuxième mot de passe et d'une deuxième identité, ID, d'utilisateur dans une deuxième zone de stockage de mots de passe, la deuxième identité, ID, d'utilisateur étant utilisée pour identifier le deuxième utilisateur, et la première zone de stockage de mots de passe et la deuxième zone de stockage de mots de passe étant des zones de stockage de mots de passe dans l'espace d'utilisateur doté de la première identité, ID, d'utilisateur ; et
lorsque le mot de passe de déverrouillage n'est pas le premier mot de passe stocké dans la première zone de stockage de mots de passe, le fait de détecter si le mot de passe de déverrouillage est le deuxième mot de passe stocké dans la deuxième zone de stockage de mots de passe.

2. Procédé d'ouverture de session d'utilisateur, le procédé étant appliqué à un dispositif électronique, et comportant :
l'affichage (1001) d'une première interface d'authentification dans un état d'écran verrouillé ;
l'obtention (1002) d'un mot de passe de déverrouillage lors de l'affichage de la première interface d'authentification ; et
l'affichage (1003) d'une première interface lorsque le mot de passe de déverrouillage est un premier mot de passe, la première interface étant un bureau de système pour un premier utilisateur, et la première interface comportant au moins une première application; ou l'affichage (1004) d'une seconde interface lorsque le mot de passe de déverrouillage est un deuxième mot de passe, la seconde interface étant un bureau de système pour un deuxième utilisateur, et la seconde interface comportant au moins une seconde application,
le premier mot de passe étant différent du deuxième mot de passe, la ou les premières applications et la ou les secondes applications étant toutes stockées dans un espace d'utilisateur doté d'une première identité, ID, d'utilisateur, et la première identité, ID, d'utilisateur étant utilisée pour identifier le premier utilisateur,
le procédé comportant en outre :
le stockage du premier mot de passe et de la première identité, ID, d'utilisateur dans une première zone de stockage de mots de passe ;
le stockage du deuxième mot de passe et d'une deuxième identité, ID, d'utilisateur dans une deuxième zone de stockage de mots de passe, la deuxième identité, ID, d'utilisateur étant utilisée pour identifier le deuxième utilisateur, la deuxième zone de stockage de mots de passe étant une zone dédiée de stockage de mots de passe pour le deuxième utilisateur, et la deuxième zone de stockage de mots de passe étant associée à la première zone de stockage de mots de passe ; et
lorsque le mot de passe de déverrouillage n'est pas le premier mot de passe stocké dans la première zone de stockage de mots de passe, le fait de détecter si le mot de passe de déverrouillage est le deuxième mot de passe stocké dans la deuxième zone de stockage de mots de passe.

3. Procédé d'ouverture de session d'utilisateur, le procédé étant appliqué à un dispositif électronique, et comportant :
l'affichage (1001) d'une première interface d'authentification dans un état d'écran verrouillé :
l'obtention (1002) d'un mot de passe de déverrouillage lors de l'affichage de la première interface d'authentification ; et
l'affichage (1003) d'une première interface lorsque le mot de passe de déverrouillage est un premier mot de passe, la première interface étant un bureau de système pour un premier utilisateur, et la première interface comportant au moins une première application; ou l'affichage (1004) d'une seconde interface lorsque le mot de passe de déverrouillage est un deuxième mot de passe, la seconde interface étant un bureau de système pour un deuxième utilisateur, et la seconde interface comportant au moins une seconde application,
le premier mot de passe étant différent du deuxième mot de passe, la ou les premières applications et la ou les secondes applications étant toutes stockées dans un espace d'utilisateur doté d'une première identité, ID, d'utilisateur, et la première identité, ID, d'utilisateur étant utilisée pour identifier le premier utilisateur,
le procédé comportant en outre :
le stockage du premier mot de passe et de la première identité, ID, d'utilisateur dans une première zone de stockage de mots de passe ;
le stockage du deuxième mot de passe dans une base de données d'application de la première application, le deuxième mot de passe étant associé au premier mot de passe ; et
lorsque le mot de passe de déverrouillage n'est pas le premier mot de passe stocké dans la première zone de stockage de mots de passe, le fait de détecter si le mot de passe de déverrouillage est le deuxième mot de passe.

4. Procédé selon l'une quelconque des revendications 1 à 3, le procédé comportant en outre, lorsque le dispositif électronique affiche la seconde interface :
la réception d'une première opération ;
l'affichage d'une deuxième fenêtre d'authentification dans un état déverrouillé en réponse à la première opération :
l'obtention d'un mot de passe de changement saisi dans la deuxième fenêtre d'authentification ; et
l'affichage de la première interface lorsque le mot de passe de changement saisi dans la deuxième fenêtre d'authentification est un troisième mot de passe.

5. Procédé selon la revendication 4, le troisième mot de passe étant le même que le premier mot de passe.

6. Procédé selon l'une quelconque des revendications 1 à 5, le procédé comportant en outre, lorsque le dispositif électronique affiche la première interface :
la réception d'une deuxième opération, la deuxième opération étant une opération de tapotement effectuée sur la première application sur la première interface ; et
l'affichage de la seconde interface en réponse à la deuxième opération.

7. Procédé selon la revendication 6, la première application étant Kids Corner.

8. Dispositif électronique, comportant un ou plusieurs processeurs, une mémoire, une pluralité d'applications, et un ou plusieurs programmes, le ou les programmes étant stockés dans la mémoire, et lorsque le ou les programmes sont exécutés par le processeur, le dispositif électronique étant rendu apte à réaliser le procédé selon l'une quelconque des revendications 1 à 7.

9. Support de stockage informatique, comportant des instructions informatiques, un dispositif électronique étant rendu apte, lorsque les instructions informatiques sont exécutées sur le dispositif électronique, à réaliser le procédé selon l'une quelconque des revendications 1 à 7.
